(19) Europäisches Patentamt
European Patent Office
Office européen des brevets

(11) EP 1 278 809 B1

(12) **FASCICULE DE BREVET EUROPEEN**

(45) Date de publication et mention de la délivrance du brevet:
**09.11.2005 Bulletin 2005/45**

(21) Numéro de dépôt: **01931803.9**

(22) Date de dépôt: **04.05.2001**

(51) Int Cl.$^7$: **C09J 7/02**, C09D 183/04

(86) Numéro de dépôt international:
**PCT/FR2001/001373**

(87) Numéro de publication internationale:
**WO 2001/085864 (15.11.2001 Gazette 2001/46)**

(54) **COMPLEXE SILICONE/ADHESIF DONT L'INTERFACE POSSEDE UNE FORCE DE DECOLLEMENT MODULABLE PAR IRRADIATION PAR FAISCEAU D'ELECTRONS**

SILIKON-KLEBSTOFFKOMPLEX MIT DURCH ELEKTRONENBESTRAHLUNG MODULIERBARER TRENNKRAFT AN DER SCHICHTGRENZE

SILICONE/ADHESIVE COMPLEX WHEREOF THE INTERFACE HAS A RELEASE FORCE CAPABLE OF BEING MODULATED BY ELECTRON BEAM IRRADIATION

(84) Etats contractants désignés:
**AT BE CH CY DE DK ES FI FR GB GR IE IT LI LU MC NL PT SE TR**

(30) Priorité: **05.05.2000 FR 0005816**

(43) Date de publication de la demande:
**29.01.2003 Bulletin 2003/05**

(73) Titulaire: **RHODIA CHIMIE**
**92512 Boulogne Billancourt Cedex (FR)**

(72) Inventeurs:
- **DHALER, Didier**
  **F-69160 Tassin (FR)**
- **LIEVRE, André**
  **F-69230 Saint-Genis-Laval (FR)**
- **MIROU, Christian**
  **F-69005 Lyon (FR)**
- **GUYOT, Christophe**
  **F-69005 Lyon (FR)**

(74) Mandataire: **Bernasconi, Jean Raymond et al**
**c/o Cabinet Lavoix,**
**2, Place d'Estienne d'Orves**
**75441 Paris Cedex 09 (FR)**

(56) Documents cités:
**EP-A- 0 601 938**
**WO-A-96/05962**
**US-A- 5 075 349**

EP 1 278 809 B1

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

## Description

La présente invention concerne d'une manière générale des complexes dits " autocollants " composés notamment d'un revêtement silicone anti-adhésif et d'un revêtement adhésif.

Ce type de complexe est généralement destiné à un usage dans lequel la matrice silicone réticulée ou polymérisée est apposée au niveau d'un support de manière à le rendre anti-adhérent vis-à-vis de l'adhésif. Ce type de complexes trouve notamment des applications dans le domaine des papiers protecteurs adhésifs, étiquettes, papiers décoratifs et rubans adhésifs.

Les huiles ou résines silicones proposées pour obtenir ce type de revêtement à propriétés anti-adhérentes dérivent généralement de systèmes réticulables par voie cationique et/ou radicalaire. Il s'agit plus particulièrement de monomère(s), oligomère(s) et/ou polymère(s) de nature polyorganosiloxane comprenant des radicaux fonctionnels et réactifs aptes à former des pontages intra- et inter- caténaires. Ces systèmes conduisent, après réticulation, à des revêtements anti-adhérents qui forment des complexes dits " autocollants " avec les adhésifs que l'on applique à leur surface après siliconage.

Une caractéristique essentielle de ces complexes silicone/adhésif est de se prêter à un décollement aisé du revêtement adhésif du revêtement silicone lors de leur utilisation.

Selon la nature des applications envisagées pour ce type de complexe, il est souhaitable de pouvoir moduler la force de décollement nécessaire à la séparation du revêtement silicone du revêtement adhésif.

En l'espèce, cette force de décollement peut être quantifiée. Bien que ses valeurs puissent varier de manière significative selon la méthode de mesure retenue, on peut globalement la caractériser comme suit pour une vitesse de décollement faible c'est-à-dire de l'ordre de 30 cm/mn et selon la méthode FTM3 :

- une force de décollement inférieure à 15g/cm est considérée comme faible,
- une force de décollement supérieure à 15g/cm et inférieure à 70g/cm est considérée moyenne, et
- une force de décollement supérieure à 70g/cm et de préférence inférieure à 200g/cm est considérée élevée.

La présente invention a précisément pour objet de proposer un complexe silicone/adhésif dont la force de décollement peut être ajustée à la demande et de préférence à une valeur comprise dans la plage énoncée ci-dessus, à savoir entre 15g/cm et 200g/cm.

Plus précisément, la présente invention concerne le domaine des complexes adhésif/silicone polymérisables et/ou réticulables et dont la force de décollement de leur interface silicone / adhésif est modulable par irradiation à l'aide d'une source à faisceau d'électrons ("Electron Bean").

Plus particulièrement, la présente invention concerne un complexe silicone/adhésif comprenant au moins un revêtement silicone appliqué sur un premier support et un revêtement adhésif appliqué sur un second support, et dont la force de décollement d'une interface silicone/adhésif est modulable, caractérisé en ce que ledit revêtement silicone comprend au moins un additif de régulation de la force de décollement d'une interface silicone/adhésif et dont l'activité est initiée et modulable par irradiation de type faisceau d'électrons.

Selon un premier aspect, l'invention a pour objet l'utilisation, dans un tel complexe, d'un additif tel que défini dans la revendication 1, dont l'activité est initiée et modulée par irradiation de type faisceau d'électrons pour réguler la force de décollement d'une interface silicone/adhésif.

Selon un autre aspect, l'invention a pour objet des complexes du type précité où l'additif est le triméthyl pentanediol triacrylate (TMPTA) ou le tétraacrylate de pentaérythrol, tels que définis dans les revendications 28 et 29.

L'activation de l'additif est de préférence réalisée par exposition à défaut du complexe, d'au moins une interface silicone/adhésif à au moins une irradiation de type faisceau d'électrons. En général, cette modulation est opérée à l'aide d'une source de faisceau d'électrons dont l'intensité est ajustée en fonction de la nature de la matrice silicone utilisée.

Selon une première variante, les deux supports sont constitués de deux entités distinctes, disposées de manière à ce que le revêtement de silicone du premier support soit en contact avec le revêtement adhésif du second support. Ce mode de réalisation est en particulier illustré par des systèmes dits étiquettes autocollantes. Dans ce cas particulier, la force de décollement de l'interface silicone/adhésif s'exerce lors de la séparation des deux supports.

Dans une seconde variante, les deux supports sont constitués respectivement par chacune des deux faces d'une même entité. Ce second mode de réalisation est en particulier illustré par les systèmes dits rubans adhésifs. Le revêtement anti-adhérent, c'est-à-dire à base de la matrice silicone et le revêtement adhésif sont mis en contact lors de l'enroulement du support sur lui-même. Dans ce cas, la force de décollement s'exerce au niveau de l'interface silicone/adhésif sous l'effet de la séparation d'une face inférieure avec une face supérieure du matériau.

Selon un mode préféré de l'invention, l'additif de régulation de la force de décollement d'une interface silicone/adhésif retenu dans le cadre de la présente invention est choisi parmi :

(i) les dérivés organiques (meth)acrylates,

(ii) les alcényléthers, et

(ii) les silicones à fonction(s) (meth)acrylate(s) et/ou à fonction(s) alcényléther(s).

Conviennent notamment comme dérivés organiques acrylates, les espèces (meth)acrylates et notamment (meth)acrylates époxydés, (meth)acryloglycéropolyesters, (meth)acrylates multifonctionnels, (meth)acrylo-urétanes, (meth)acrylopolyéthers, (meth)acrylopolyesters, et (meth)acrylo-acryliques.

Sont plus particulièrement préférés le triacrylate de triméthylol propane, le diacrylate de tripropylène glycol, le tétraacrylate de pentaéryth ritol.

En ce qui concerne les alcényléthers, ils s'agit de préférence des vinyléthers. Ils peuvent être choisis parmi le cyclohexanediméthanoldivinyléther, le triéthylenglycoldivinyléther (DVE-3), l'hydroxybutylvinyléther, le dodécylvinyléther et les autres vinyléthers commercialisés par la société ISP et notamment décrits dans la demande de brevet WO 99/19371.

Selon une variante préférée de l'invention, l'additif utilisé est un silicone à fonction(s) (meth)acrylate(s) et/ou alcényléther(s).

A titre représentatif de fonctions (meth)acrylates portées par la silicone et convenant tout particulièrement à l'invention, on peut plus particulièrement citer les dérivés acrylates, méthacrylates, éthers de (meth)acrylates et esters de meth(acrylates) liés à la chaîne polysiloxane par une liaison Si-C. De tels dérivés acrylates sont notamment décrits dans les brevets EP 281 718, FR 2 632 960 et EP 940 458

En ce qui concerne les dérivés silicones à fonction alcényléther, ils dérivent généralement d'une réaction d'hydrosilylation entre des huiles contenant des motifs structuraux SiH et des composés portant des fonctions alcényléther tels des allylvinyléthers, allylvinyloxyéthoxybenzène et analogues. Ce type de composés est notamment décrit dans le brevet US 5 340 898.

L'additif est contenu dans le revêtement silicone et est bien entendu présent en quantité suffisante pour permettre la régulation de la force de décollement de l'interface adhésif/silicone. Il peut être présent jusqu'à 50% en poids du revêtement silicone exprimé en matière sèche.

Toutefois, l'additif est de préférence employé à raison de 0,1 à 20% environ du poids du mélange total silicone. Bien entendu, la quantité en cet additif est susceptible de varier de manière significative selon qu'il est de nature siliconée ou non.

C'est ainsi que dans le cas particulier où cet additif est un dérivé organique acrylate ou un alcényléther, sa quantité est généralement comprise entre 0,1 et 10% environ, de préférence 0,5 et 5% environ et plus préférentiellement 1 et 3%.

En revanche, un additif de type silicone est de préférence utilisé jusqu'à 20% en poids et de préférence 15% en poids.

Il semble par ailleurs que la quantité en irradiation E.B. exprimée généralement en doses en rayonnement soit un paramètre utile pour moduler l'activité de l'additif défini ci-dessus et donc ajuster le niveau de la force de décollement générée par cet additif.

C'est ainsi que dans les exemples figurant ci-après, on note que le niveau d'adhérence entre le revêtement silicone et l'adhésif qui lui est associé, est augmenté significativement après irradiation. Avantageusement, la force de décollement s'avère variable selon le taux en additif présent dans la formulation et l'intensité d'irradiation.

En ce qui concerne le revêtement silicone, il dérive généralement de la polymérisation et/ou réticulation de monomères, oligomères et/ou polymères polyorganosiloxanes.

En fait, cette polymérisation et/ou réticulation peut dériver :

- d'une réaction d'hydrosilylation entre d'une part des monomères, oligomères et/ou polymères portant des motifs structuraux Si-H réactifs et d'autre part des monomères, oligomères et/ou polymères portant un groupement réactif aliphatique insaturé,
- d'une réaction de déshydrogénocondensation entre d'une part des monomères, oligomères et/ou polymères portant des motifs structuraux Si-H réactifs et d'autre part des monomères, oligomères et/ou polymères portant des motifs SiOH et/ou réactifs,
- d'une réaction de réticulation/polymérisation de monomères, oligomères et/ou polymères portant des motifs réactifs de type acrylate, époxy, oxétane, dioxolane et/ou alcényléther; cette réaction pouvant être effectuée par irradiation UV, activation thermique ou par faisceau d'électrons.

Dans la variante où le revêtement dérive d'une réaction d'hydrosilylation, les dérivés polyorganosiloxanes sont de préférence choisis de manière à ce que le polyorganosiloxane possédant au moins un radical SiH par molécule

est un polyorganosiloxane A tel que décrit ci-après et le polyorganosiloxane présentant par molécule au moins un groupement réactif aliphatique insaturé répond à la définition du polyorganosiloxane B décrit ci-après.

Les composés A sont choisis parmi les polyorganohydrogénosiloxanes comportant :

* des motifs de formule suivante :

$$H_aW_bSiO_{\frac{4-(a+b)}{2}} \quad (1)$$

dans laquelle :

- les symboles W, semblables et/ou différents représentent:

· un radical alkyle linéaire ou ramifié contenant 1 à 18 atomes de carbone, éventuellement substitué par au moins un halogène, de préférence le fluor, les radicaux alkyle étant de préférence méthyle, éthyle, propyle, octyle et 3,3,3-trifluoropropyle,
· un radical cycloalkyle contenant entre 5 et 8 atomes de carbone cycliques, éventuellement substitué par au moins un halogène, de préférence le fluor,
· un radical aryle contenant entre 6 et 12 atomes de carbone pouvant être substitué éventuellement sur la partie aryle par des halogènes, des alkyles et/ou des alkoxyles contenant 1 à 3 atomes de carbone, de préférence phényle ou dichlorophényle,
une partie arylalkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

- a est 1 ou 2, b est 0, 1 ou 2, avec la somme (a+b) ayant une valeur comprise entre 1 et 3,

* éventuellement d'autres motifs de formule moyenne (2):

$$WcSiO_{\frac{4-c}{2}} \quad (2)$$

dans laquelle W a la même signification que ci-dessus et c a une valeur comprise entre 0 et 3.

Le polyorganosiloxane A peut être uniquement formé de motif de formule (1) ou comporter en plus des motifs de formule (2). Il peut présenter une structure linéaire, ramifiée ou non, cyclique ou en réseau. Le degré de polymérisation est supérieur ou égal à 2. Plus généralement, il est inférieur à 5000.

Des exemples de motifs de formule (1) sont :

$H(CH_3)_2SiO_{1/2}$, $HCH_2SiO_{2/2}$, $H(C_6H_5)SiO_{2/2}$.

Lorsqu'il s'agit de polymères linéaires, ceux-ci sont essentiellement constitués de motifs « D » $W_2SiO_{2/2}$, $WHSiO_{2/2}$, et « M » $W_3SiO_{1/2}$, $W_2HSiO_{1/2}$.

Ces polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont constitués de motifs « D » $W_2SiO_{2/2}$, et $WHSiO_{2/2}$, qui peuvent être du type dialkylsiloxy ou alkylarylsiloxy. Ils présentent une viscosité de l'ordre de 1 à 5000 mPa.s.

La viscosité dynamique à 25°C de tous les polymères considérés dans le présent exposé peut être mesurée à l'aide d'un viscosimètre BROOKFIELD, selon la norme AFNOR NFT 76 102 de février 1972.

Des exemples de polyorganosiloxanes A sont : les diméthylpolysiloxanes à extrémités hydrogénodiméthylsilyles, les copolymères diméthylhydrogénométhylpolysiloxanes à extrémités triméthylsilyles, les copolymères diméthylhydrogénométhylpolysiloxanes à extrémités hydrogénodiméthylsilyles, les hydrogénométhylpolysiloxanes à extrémités triméthylsilyles, et les hydrogénométhylpolysiloxanes cycliques.

S'agissant des polyorganosiloxanes B à savoir présentant, par molécule, au moins un groupement réactif aliphatique insaturé, ils sont de préférence sélectionnés parmi les polyorganosiloxanes comprenant :

* des motifs semblables ou différents de formule (3) :

$$W'_dY_eSiO_{\frac{4-(d+e)}{2}} \quad (3)$$

dans laquelle :

- les symboles W', semblables et/ou différents, répondent à la même définition que celle donnée ci-dessus pour W,
- les symboles Y sont semblables ou différents et représentent un reste alcényle linéaire ou ramifié en $C_1$-$C_{12}$, et présentant au moins une insaturation éthylénique en extrémité de chaîne et/ou dans la chaîne et éventuellement au moins un hétéroatome ;
- e est égal à 1 ou 2, d est égal à 0, 1 ou 2 avec la somme (d +e) ayant une valeur comprise entre 1 et 3;

* et éventuellement d'autres motifs de formule moyenne (2) tel que défini précédemment.

Le polyorganosiloxane B peut être uniquement formé de motif de formule (3) ou comporter en plus des motifs de formule (2).

S'agissant des restes Y, ils sont avantageusement choisis parmi la liste suivante : vinyle, propényle, 3-butényle, 5-hexényle, 9-décényle, 10-undécényle, 5,9-décadiényle, et 6-11-dodécadiényle.

Ces polyorganosiloxanes peuvent présenter une structure linéaire (ramifiée ou non) cyclique ou en réseau. Leur degré de polymérisation est, de préférence, compris entre 2 et 5000.

Lorsqu'il s'agit de polymères linéaires, ceux-ci sont essentiellement constitués de motifs « D » $W'_2SiO_{2/2}$, $W'YSiO_{2/2}$, $Y_2SiO_{2/2}$, et « M » $W'_3SiO_{1/2}$, $W'Y_2SiO_{1/2}$, $W'_2YSiO_{1/2}$.

A titre d'exemples de motifs « M » terminaux, on peut citer les groupes triméthylsiloxy, diméthylphénylsiloxy, diméthylvinylsiloxy, diméthylhexénylsiloxy, diméthyléthoxysiloxy, diméthyléthyltriéthoxysiloxy.

A titre d'exemples de motifs « D », on peut citer les groupes diméthylsiloxy, méthylphénylsiloxy, méthylvinylsiloxy, méthylbutènylsiloxy, méthylhexénylsiloxy, méthyldécénylsiloxy, méthyldécadiényisiloxy, méthyl-3-hydropropylsiloxy, méthyl-3-glycidoxypropyl-siloxy, méthyl-2(3',4'-époxycyclohexyl)éthylsiloxy, méthylbutoxysiloxy, méthyl-β-triméthoxysilyléthylsiloxy, méthyl-β-triéthoxysilyléthylsiloxy.

Lesdits polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont cosntitués de motifs « D » $W_2SiO_{2/2}$, $Y_2SiO_{2/2}$, $WYSiO_{2/2}$, qui peuvent être du type dialkylsiloxy, alkylarylsiloxy, alkylvinylsiloxy, alkylsiloxy, alkylXsiloxy ; des exemples de tels motifs ont déjà été cités ci-dessus.

Lesdits polyorganosiloxanes B cycliques présentent une viscosité de l'ordre de 1 à 5000 mPa.s.

Les composés B à insaturation aliphatique utiles dans le cadre du procédé selon l'invention sont, par exemple, ceux à insaturation oléfinique ou acétylénique bien connus dans le domaine technique considéré. A cet égard, on peut se référer aux brevets américains 3 159 662, 3 220 272 et 3 410 886, qui décrivent les susdits composés.

Suivant une variante intéressante de l'invention, le mélange réactionnel comprend des composés A et des composés B en quantité telle que le rapport molaire Si-H/groupements insaturés soit compris entre 0,4 et 10 de préférence entre 1 et 4 et, plus préférentiellement encore, soit de l'ordre de 1,7. D'autre part, en pratique, au sein du mélange réactionnel, au moins un des composés A comprend au moins trois radicaux SiH et au moins un des composés B comprend au moins deux groupements réactifs aliphatiques.

Les conditions réactionnelles d'hydrosilylation par thermoactivation sont les conditions usuelles. Elles sont généralement catalysées par des complexes thermosensibles du platine. A titre représentatif de ces catalyseurs, on peut notamment citer le catalyseur de KARSTEDT. Le catalyseur est présent à raison de 1 à 400, de préférence de 10 à 300, et plus préférentiellement de 20 à 200 ppm de platine métal exprimé en poids par rapport au composé polyorganosiloxane utilisé.

Outre ce catalyseur, les composants du revêtement silicone contiennent un inhibiteur d'initiation de la réaction. Conviennent notamment à titre d'inhibiteur, les esters carboxyliques dialkyles tels que le dialyle maléate ou des hydroperoxydes.

Dans une seconde variante où le revêtement de silicone dérive d'une réaction de déshydrogénocondensation, les dérivés polyorganosiloxanes sont de préférence choisis de manière à ce que le dérivé polyorganosiloxane possédant au moins un radical SiH réactif par molécule est un polyorganosiloxane A tel que défini précédemment et le polyorganosiloxane présentant par molécule au moins un un radical SiOH réactif répond à la définition du polyorganosiloxane C décrit ci-après.

Les composés C sont choisis parmi les polyorganosiloxanes comportant :

* des motifs de formule (4) suivante :

$$(OH)_f W''_g SiO_{\frac{4-(f+g)}{2}} \qquad (4)$$

dans laquelle:

- les symboles W", semblables ou différents, sont de définition identiques à W selon la formule (1),
- f est 1 ou 2, g est 0, 1 ou 2, avec la somme (f+g) ayant une valeur comprise entre 1 et 3,

et éventuellement d'autres motifs de formule (2) telle que définie précédemment.

Le polyorganosiloxane C peut être uniquement formé de motif de formule (4) ou comporter en plus des motifs de formule (2).

Il peut présenter une structure linéaire, ramifiée ou non, cyclique ou en réseau. Le degré de polymérisation est supérieur ou égal à 2. Plus généralement, il est inférieur à 5000.

Des exemples de motifs de formule (4) sont :

$HO(CH_3)SiO_{1/2}$, $HOCH_3SiO_{2/2}$, $HO(C_6H_5)SiO_{2/2}$.

Lorsqu'il s'agit de polymères linéaires, ceux-ci sont essentiellement constitués de motifs « D » $W''_2SiO_{2/2}$, $W''(OH)SiO_{2/2}$, $(OH)_2SiO_{2/2}$ et « M » $W''_3SiO_{1/2}$, $W''(OH)_2SiO_{1/2}$.

Ces polyorganosiloxanes linéaires peuvent être des huiles de viscosité dynamique à 25°C de l'ordre de 1 à 100 000 mPa.s à 25°C, généralement de l'ordre de 10 à 5000 mPa.s à 25°C, ou des gommes présentant une masse moléculaire de l'ordre de 1 000 000.

Lorsqu'il s'agit de polyorganosiloxanes cycliques, ceux-ci sont constitués de motifs « D »$W''_2SiO_{2/2}$, et $W''(OH)SiO_{2/2}$, $(OH)_2SiO_{2/2}$, qui peuvent être du type dialkylsiloxy ou alkylarylsiloxy. Ils présentent une viscosité de l'ordre de 1 à 5000 mPa.s.

La viscosité dynamique à 25°C de tous les polymères considérés dans le présent exposé peut être mesurée à l'aide d'un viscosimètre BROOKFIELD, selon la norme AFNOR NFT 76 102 de février 1972.

Selon une variante avantageuse de l'invention, les polyorganosiloxanes A utilisés comportent de 1 à 50 motifs SiH par molécule. Selon une variante avantageuse de l'invention, les polyorganosiloxanes C utilisés comportent de 1 à 50 motifs SiOH par molécule.

D'autre part, en pratique, au sein du mélange réactionnel, au moins un des composés A comprend au moins trois radicaux SiH et au moins un des composés C comprend au moins deux groupements SiOH.

Les conditions de réaction de déshydrogénocondensation entre les monomères, oligomères et/ou polymères de nature polyorganosiloxane à motifs SiH et les monomères, oligomères et/ou polymères de nature polyorganosiloxane à motifs SiOH sont les conditions usuelles, par exemple par activation de type thermique en présence d'un catalyseur (W. ALTERNOLL « Chemistry and Technology of Silicones » Ed 68, ch 5, p 201-205).

En ce qui concerne la troisième variante selon laquelle le revêtement silicone dérive de la polymérisation et/ou réticulation par irradiation UV, activation thermique ou par faisceau d'électrons de monomères, oligomères ou polymères polyorganosiloxanes portant des motifs réactifs de type acrylate, époxy, oxétane, dioxolane et/ou alcényléther, ces derniers sont de préférence choisis parmi les polyorganohydrogénosiloxanes comportant:

* des motifs de formule suivante (5):

$$Z_n W'''_i SiO_{\frac{4(h+j)}{2}} \qquad (5)$$

dans laquelle :

- les symboles W''', semblables et/ou différents, répondent à la même définition que celle donnée pour W à la formule (1) :
- les symboles Z sont semblables ou différents et représentent :

· un groupement W''',

· un radical hydrogène,

· et/ou un groupement organofonctionnel réticulable, de préférence un groupement acrylatefonctionnel, époxyfonctionnel, oxétanefonctionnel, dioxolanefonctionnel et/ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,

avec l'un au moins des symboles Z représentant un groupement organique fonctionnel réticulable.

- h est égal à 1 ou 2, i est égale à 0,1 ou 2 avec la somme (h+i) ayant une valeur comprise entre 1 et 3.

* éventuellement d'autres motifs de formule (2) telle que définie précédemment.

Selon une variante avantageuse de l'invention, les polyorganosiloxanes utilisés comportent de 3 à 10 groupements organofonctionnels par chaine macromoléculaire. Pour un groupement époxyfonctionnel, cela correspond à des taux d'époxyde variant de 20 à 2000 meq. molaire/100 g de polyorganosiloxane.

Comme exemples de radicaux organofonctionnels, on peut citer ceux inclus dans les formules suivantes :

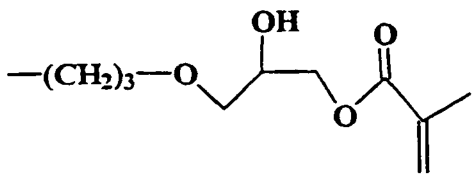

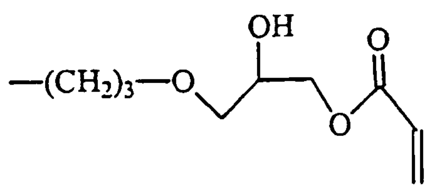

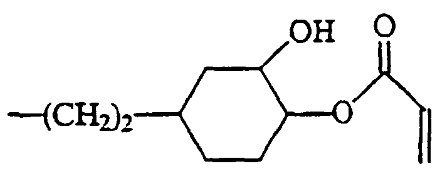

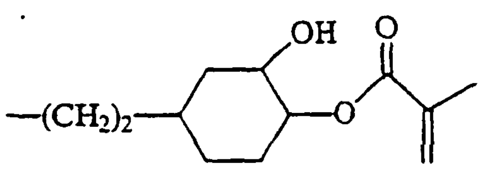

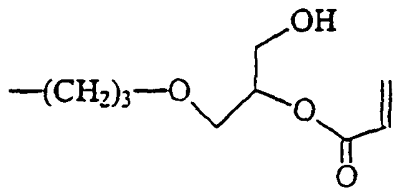

et leurs isomères ;

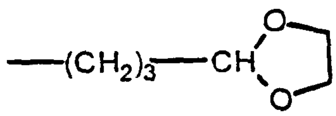 ; 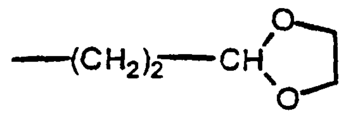

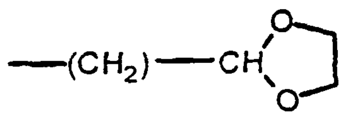

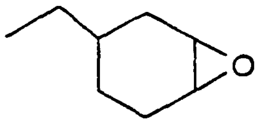 ; 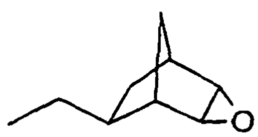 ; 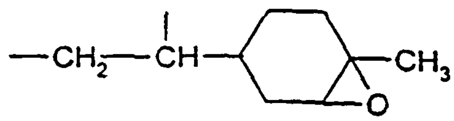

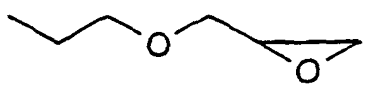 ;

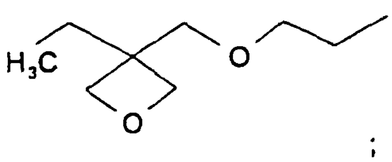 ; 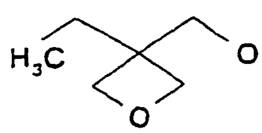 ; 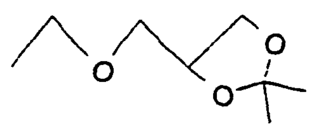

$$-(O)_{n'}-(CH_2)_{n''}-O-CH=CH_2$$

$$-(O)_{n'}-(CH_2)_{n-}-R^1-O-CH=CH_2$$

$$-(O)_{n'}-(CH_2)_{n''}-O-CH=CH-R^2$$

dans lesquelles :

- n' représente 0 ou 1 et n" un entier compris entre 1 et 5

- $R^1$ représente :
  - un radical alkylène linéaire, ramifié ou cyclique en $C_1$-$C_{12}$, éventuellement substitué,
  - ou un radical arylène en $C_5$-$C_{12}$, de préférence phénylène, éventuellement substitué, de préférence par un à trois groupements alkyles en $C_1$-$C_6$,
- $R^2$ représente un radical alkyle linéaire ou ramifié en $C_1$-$C_6$.

Les polyorganosiloxanes linéaires peuvent être des huiles de viscosité dynamique à 25°C, de l'ordre de 10 à 10 000 mPa.s à 25°C, généralement de l'ordre de 20 à 5 000 mPa.s à 25°C et, plus préférentiellement encore, de 20 à 600 mPa.s à 25°C, ou des gommes présentant une masse moléculaire de l'ordre de 1 000 000.

Lorsqu'il s'agit de polyorganosiloxanes cycliques, ceux-ci sont constitués de motifs qui peuvent être, par exemple, du type dialkylsiloxy ou alkylarylsiloxy. Ces polyorganosiloxanes cycliques présentent une viscosité de l'ordre de 1 à 5 000 mPa.s.

La viscosité dynamique à 25°C, de toutes les silicones considérées dans la présente description peut être mesurée à l'aide d'un viscosimètre BROOKFIELD, selon la norme AFNOR NFT 76 102 de février 1972.

Ce type de composés est décrit notamment dans les brevets DE-An°4.009.889 ; EP-A- n°396.130 ; EP-A- n°355.381 ; EP-A- n°105.341 ; FR-A- n°2.110.115 et FR-A- 2.526.800.

Les polyorganosiloxanes vinyloxyfonctionnels peuvent être préparés par exemple par réaction d'hydrosilylation entre des huiles à motifs Si-H et des composés vinyloxyfonctionnels tels que l'allylvinylether, l'allyl-vinyl oxyethoxybenzène.

Les polyorganosiloxanes époxy fonctionnels peuvent être préparés par exemple par réaction d'hydrosilylation entre des huiles à motifs Si-H et des composés epoxyfonctionnels tels que vinyl-4 cyclohexeneoxyde, allylglycidyléther.

Les polyorganosiloxanes oxétane fonctionnels peuvent être préparés par exemple par hydrosilylation d'oxétanes insaturés ou condensation d'oxétanes renfermant une fonction hydroxy.

Les polyorganosiloxanes dioxolane fonctionnels peuvent être préparés par exemple par hydrosilylation de dioxolanes insaturés.

Les polyorganosiloxanes acrylatefonctionnels peuvent être préparés par exemple par réaction entre un polyorganosiloxane fonctionnalisé époxy avec de l'acide acrylique.

Les conditions réactionnelles de polymérisation et/ou réticulation par activation de type UV, thermique ou faisceau d'électrons sont les conditions usuelles.

Comme amorceurs classiques, conviennent notamment ceux décrits dans le brevet EP 562 897. Il peut également s'agir de sels d'iodonium ou de sulfonium correspondant de l'hexafluorophosphate ou hexafluoroantimorate.

En l'occurrence, la présente invention permet avantageusement de s'affranchir des modulateurs conventionnels.

A titre représentatif de ces modulateurs, on peut plus particulièrement citer les résines comprenant notamment des motifs M et des motifs Q et/ou des motifs T. Les motifs M sont tels que définis précédemment, les motifs siliconés Q sont de type $SiO_{4/2}$ et les motifs T sont de type $SiO_{3/2}W$ avec W tel que défini précédemment.

Ces résines sont en fait des résines à travers lesquelles il s'avère possible de moduler le niveau d'adhérence du revêtement silicone correspondant vis-à-vis d'un substrat donné. Conventionnellement, c'est à travers la proportion en ce type de résines dans une composition silicone, qu'est ajusté le degré d'adhérence du revêtement silicone correspondant vis-à-vis d'un substrat.

Le revêtement silicone selon l'invention peut par ailleurs comprendre des additifs.

Il peut s'agir par exemple de charges minérales ou non et/ou de pigments tels des fibres synthétiques ou naturelles de carbonate de calcium, du talc, de l'argile, du dioxyde de titane ou de la silice fumée. Cela peut permettre d'améliorer notamment les caractéristiques mécaniques des matériaux finaux.

Les colorants solubles, les inhibiteurs d'oxydation et/ou tout autre matériau n'interférant pas avec l'activité catalytique du complexe de platine ainsi que l'activité régulatrice de la force de décollement de l'additif peuvent être également ajoutés au composant de la matrice silicone.

S'agissant de l'adhésif, celui est choisi parmi les adhésifs qui sont couramment utilisés pour être enduits à la surface d'une grande variété de matériaux de façon à obtenir des étiquettes, des rubans ou tout autre matériau autocollant sensibles à la pression, appelés PSA (" *pressure sensitive adhesive* "). Ces adhésifs confèrent au matériau la faculté d'adhérer à la surface d'un support, sans nécessiter une autre activation qu'une faible pression. Les adhésifs de type PSA peuvent se présenter sous forme solvant, sous forme aqueuse et notamment en phase d'émulsion, et/ ou sous forme thermofusible ("hot-melt").

Les monomères, mis en oeuvre pour préparer l'adhésif, sont sélectionnés en fonction de leur température de transition vitreuse, Tg, pour conférer aux polymères les incorporant, le comportement attendu en termes d'adhérence et de viscoélasticité. A cet effet, les monomères possèdent avantageusement une température de transition vitreuse suffisamment basse, généralement comprise entre -70 et -10 °C et de préférence est inférieure à -30 C.

Plus précisément, ces monomères sont choisis dans le groupe constitué :

- des esters(méth)acryliques comme les esters de l'acide acrylique et de l'acide méthacrylique avec les alcanols en $C_1$-$C_{12}$ hydrogénés ou fluorés, de préférence $C_1$-$C_8$, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'isooctyle, l'acrylate de décyle, l'acrylate de dodécyle, le méthacrylate de méthyle, le méthacrylate d'éthyle, le méthacrylate de n-butyle, le méthacrylate d'isobutyle ;
- des nitriles vinyliques dont plus particulièrement ceux ayant de 3 à 12 atomes de carbone, comme en particulier l'acrylonitrile et le méthacrylonitrile ;
- des esters vinyliques d'acide carboxylique comme l'acétate de vinyle, le versatate de vinyle, le propionate de vinyle,
- des acides mono- et di- carboxyliques insaturés éthyléniques comme l'acide acrylique, l'acide méthacrylique, l'acide itaconique, l'acide maléique, l'acide fumarique et les mono- et di-alkylesters des acides mono- et di-carboxyliques du type cité avec les alcanols ayant de préférence 1 à 8 atomes de carbone et leurs dérivés N-substitués,
- des amides des acides carboxyliques insaturés comme l'acrytamide, le méthacrylamide, le N-méthylolacrylamide ou méthacrylamide, les N-alkylacrylamides,
- des monomères éthyléniques comportant un groupe acide sulfonique et ses sels alcalins ou d'ammonium par exemple l'acide vinylsulfonique, l'acide vinylbenzènesulfonique, l'acide alpha-acrylamido methylpropane-sulfonique, le 2-sulfoéthylène-méthacrylate,
- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth) acrylates d'aminoalkyle et les (méth)acrylamides d'aminoalkyle comme le diméthylaminoéthyl-acrylate ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,
- des monomères zwitterioniques comme par exemple l'acrylate de sulfopropyl(diméthyl)aminopropyle,
- des monomères éthyléniques portant un groupement sulfate,
- des monomères éthyléniques portant une ou plusieurs fonction(s) phosphate et/ou phosphonate,
- et leurs mélanges.

De préférence, les PSA sont obtenues par polymérisation majoritairement de monomères acrylates d'alkyle tels que des monomères (méth)acrylates d'alkyle qui sont généralement présents à raison de 50 à environ 99 % et de préférence à raison de 80 à 99 % en poids et de monomères polaires copolymérisables comme par exemple de l'acide acrylique, en proportions plus réduites.

Plus préférentiellement, les monomères sont choisis parmi l'acrylate de 2-éthylehexyle, l'acrylate de butyle, l'acrylate d'hexyle, l'acrylate d'heptyle, l'acrylate d'octyle, l'acrylate d'iso-octyle, l'acrylate de décyle, l'acrylate d'isobutyle, l'acrylate de dodécyle ou leurs mélanges, les méthacrylates comme le méthacrylate de n-butyle, l'acide méthacrylique, l'acide acrylique, l'acide itaconique, l'acide maléique et/ou l'acrylamide.

Les PSA peuvent bien entendu être utilisés sous une forme formulée, c'est-à-dire en mélange avec des additifs conventionnels des adhésifs tels des agents mouillants, de pégosité, etc..

Classiquement les complexes selon l'invention peuvent comprendre, en outre, un ou plusieurs additifs choisis en fonction de l'application finale visée.

Les additifs peuvent être notamment des composés éventuellement sous forme de polymères, à hydrogènes mobiles comme des alcools, des glycols et des polyols, utiles pour améliorer la flexibilité notamment de la matrice silicone après polymérisation et/ou réticulation ; on peut citer par exemple les polycaprolactones-polyols, en particulier le polymère obtenu au départ de 2-éthyl-2-(hydroxyméthyl)-1,3-propane-diol et de 2-oxépanone tel que le produit TONE POLYOL-301 commercialisé par la Société UNION CARBIDE, ou les autres polymères commerciaux TONE POLYOL 201 et TONE POLYOL 12703 de la société UNION CARBIDE. On peut également citer comme additifs, les diacides à longue chaîne alkyle, les esters gras d'acides insaturés époxydés ou non, par exemple l'huile de soja époxydée ou l'huile de lin époxydée, le 2-éthylhexylester époxydé, le 2-éthylhexyl époxy stéarate, l'époxystéarate d'octyle, les esters acryliques époxydés, les acrylates d'huile de soja époxydés, les acrylates d'huile de lin époxydés, l'éther diglycidique de glycolpolypropylène, les époxydes aliphatiques à longue chaîne, etc..

Il peut s'agir encore, quelle que soit la nature de la matrice polymérisable, par exemple : de charges telles que notamment des fibres synthétiques (polymères) ou naturelles broyées, du carbonate de calcium, du talc, de l'argile, du dioxyde de titane, de la silice de précipitation ou de combustion ; de colorants solubles ; d'inhibiteurs d'oxydation et de corrosion ; de modulateurs d'adhérence organosiliciques ou non ; d'agents fongicides, bactéricides, anti-microbiens ; et/ou de tout autre matériau n'interférant pas avec l'activité de l'additif conforme à l'invention.

Les quantités en revêtement déposées sur les supports sont variables.

Les quantités en revêtement silicone s'échelonnent le plus souvent entre 0,1 et 5 g/m$^2$ de surface traitée. Ces quantités dépendent de la nature des supports et des propriétés anti-adhérentes recherchées. Elles sont plus souvent comprises entre 0,5 et 1,5 g/m$^2$ pour des supports non poreux.

En ce qui concerne les quantités en revêtement adhésif, elles sont de préférence inférieures à 200g/m$^2$ et plus préférentiellement à 100 g/m$^2$.

Les supports peuvent être un matériau métallique tel fer blanc, de préférence un matériau cellulosique de type papier ou carton par exemple, ou un matériau polymérique de type vinyle. Des films polymériques thermoplastiques comme le polyéthylène, le prolypropylène ou le polyester sont particulièrement avantageux.

Dans le mode de réalisation où le revêtement adhésif est en contact avec un support constitué d'un second matériau ce second matériau peut être choisi parmi les matériaux proposés pour le premier support et être de nature identique ou non au premier support. Le revêtement adhésif peut être appliqué selon différents modes. Il peut notamment être déposé par transfert.

Enfin, le support sur lequel est appliqué le revêtement silicone et/ou le revêtement adhésif peut déjà être revêtu d'un revêtement initial auquel est superposé un revêtement conforme à l'invention sous réserve que ce revêtement annexe soit transparent aux irradiations de type faisceau d'électrons.

La présente invention concerne également les articles (feuilles, rubans par exemple) comprenant un complexe conforme à l'invention. Il peut notamment s'agir d'étiquettes, de feuilles autocollantes ou de rubans adhésifs.

Selon un aspect particulier, la présente invention concerne l'utilisation d'un additif tel que défini dans la revendication 1 dans un revêtement de silicone conforme à l'invention et destiné à former un complexe silicone / adhésif tel que défini ci-dessus pour la modulation des forces de décollement d'une interface silicone 1 adhésif par activation par irradiation de type faisceau d'électrons dudit additif.

Plus précisément, la présente invention a pour objet l'utilisation d'au moins un dérivé organique (méth)acrylate, un alcényléther et/ou un silicone à fonction(s) (méth)acrylate(s) et/ou à fonction(s) alcényléther(s), activable par une source à faisceau d'électrons, dans une composition à base de silicone conforme à la présente invention, à titre d'additif de régulation de l'adhésion du revêtement siliconé correspondant vis-à-vis d'un substrat, de préférence un revêtement adhésif tel que défini précédemment.

L'utilisation revendiquée permet avantageusement de moduler, en fonction de l'irradiation appliquée, à l'aide d'une source à faisceau d'électrons, la force de décollement manifestée par le revêtement silicone incorporant ledit additif, vis-à-vis d'un substrat et de préférence un revêtement adhésif conforme à l'invention.

En ce qui concerne plus particulièrement les spécificités dudit additif et des revêtements siliconés ou adhésifs en termes de composition chimique, quantité, mode de préparation et/ou d'activation, on se reportera à ce qui précède.

Les exemples et figures figurant ci-après sont présentés à titre illustratif et non limitatif de l'objet de la présente invention.

<u>Matériels et Méthode</u>

On utilise une formulation silicone constituée du système UV cationique (huile Silcolease Poly® et Silcolease cata211® commercialisées par Rhodia Chimie) avec deux types d'additifs conformes à l'invention. Il s'agit de :

- Une huile silicone avec des fonctions acrylates : Résine Silcolease 21621®.
- Un monomère organique acrylique : le TriMéthylPentanediolTriAcrylate (TMPTA).

Ces additifs peuvent représenter jusqu'à 50% en poids du revêtement.

<u>EXEMPLE 1</u>

La formulation silicone UV cationique testée est la suivante :

Silcolease Cata 211® / Silcolease poly 200® + résine Silcolease 21621®

La résine Silcolease 21621® qui représente l'additif de modulation est ajoutée à un seul taux: 10 % dans une formulation constituée du mélange précédent Silcolease poly200®/ Silcolease cata211®. La formulation détaillée est donnée ci-après.

| | Formulation 1 | Formulation 2 |
|---|---|---|
| Silcolease Poly 200® | 90 | 90 |
| Résine Silcolease 21621® | | 10 |

(suite)

| | Formulation 1 | Formulation 2 |
|---|---|---|
| Silcolease Cata 211® | 2.5 | 2.5 |

A cette teneur la résine Silcolease 21621® est parfaitement miscible.

Les formulations sont enduites à une vitesse de 50 m/min sur un film OPP CR50 d'UCB ( film Polypropylène) à l'aide d'un pilote d'enduction Rotomec. Le revêtement siliconé est réticulé par passage sous une lampe UV Fusion de 80W/cm (tube H+). Les dépôts sont de l'ordre de 1.2g/$m^2$ pour assurer une bonne couverture du support. L'enduction sur le support ainsi que la polymérisation des mélanges ne pose aucun problème. Aucune manifestation d'aspect huileux, de démouillage ou de gommage au toucher n'est observé.

Les revêtements obtenus sont ensuite adhésivés avec l'adhésif de nature acrylique Tesa® 4970. Le complexe est ensuite soumis à une irradiation d'une source EB au travers du film OPP siliconé.

Six conditions d'irradiation sont appliquées, la dose reçue par l'échantillon est exprimée en Kgray, elle dépend de la vitesse de passage sous la source et du réglage de l'intensité.

Dans le tableau 1 sont regroupées les différentes conditions de réglage du générateur du faisceau d'électrons (EB) et les doses reçues par l'échantillon. Cette irradiation est faite au travers du film support et de la couche silicone. La source EB est de marque IRELEC® Sa tension d'accélération est comprise entre 200 et 400KeV et l'intensité dans le filament est comprise entre 0 à 10mA. L'échantillon est transporté sous le faisceau d'électron à des vitesses comprises entre 0.15 et 8 m/mn à l'aide d'un convoyeur. En ajustant la tension d'accélération, l'intensité dans le filament et la vitesse de convoyage on peut ajuster la dose d'irradiation entre quelques et une centaine de Kgrays.

Tableau 1

| Conditions | Test 1 | Test 2 | Test 3 | Test 4 | Test 5 | Test 6 |
|---|---|---|---|---|---|---|
| Intensité en mA | 2.5 | 2.5 | 2.5 | 2.5 | 7.5 | 5 |
| Vitesse de passage sous le faisceau en m/mn | 8 | 1 | 0.7 | 0.56 | 1.5 | 1 |
| Energie d'irradiation en Kilo grays | 5 | 44 | 90 | 130 | 128 | 131 |

Dans les heures qui suivent l'irradiation EB, le complexe est séparé par test de pelage à 180° à une vitesse de 300mm/mn comme décrit dans la norme FINAT3. Les forces de pelage obtenues sont regroupées dans le tableau 2 ci-dessous. A titre comparatif, il a également été testé une formulation sans additif.

Tableau 2

| Formulations silicones | FORCE D'ADHERENCE TESA 4970 EN G/CM | | | | | | |
|---|---|---|---|---|---|---|---|
| | Sans irradiation | Test 1 | Test 2 | Test 3 | Test 4 | Test 5 | Test 6 |
| Formulation1 : Poly 200®-cata211® (temoin) | 8.4 | 16.3 | 23.7 | 28.3 | 50 | 38.9 | 48.8 |
| Formulation 2 : Poly 200®- cata 211®-10% Résine Silcolease 21621® (essai 1) | 9.6 | 17.4 | 65 | 80.8 | 94.5 | 90.1 | 104.1 |

On constate que l'irradiation provoque une augmentation de la force de décollement pour la formulation additivée. On atteint des forces de 80g /cm pour une dose de 90Kgray. On note un effet modulant avec la formulation non additivée mais de beaucoup plus faible amplitude, il est obtenu avec des doses d'irradiation supérieures.

EXEMPLE 2 :

La formulation testée est une formulation Silcolease Cata 211 ® / Silcolease poly 200®. L'additif modulant retenu est le TMPTA.

Le TMPTA est ajouté à deux taux : 0.34 et 5%. Le mélange à 0.34% est miscible tandis que le mélange à 5% est non miscible. Le détail des formulations évaluées est donné ci-après.

| | Formulation 1 : Sans additif | Formulation 3 : 0.34% de TMPTA | Formulation 4 : 5% de TMPTA |
|---|---|---|---|
| Silcolease Poly 200® | 100 | 100 | 95 |
| TMPTA | | 0.34 | 5 |
| Silcolease Cata | 2.5 | 2.5 2.5 | 211® |

Les conditions de mise en oeuvre sont identiques à l'essai précédent.

Comme précédemment ces enductions sont adhésivées avec l'adhésif Tesa 4970® puis le complexe est irradié dans différentes conditions qui sont celles figurant dans le tableau 1 de l'exemple 1. On mesure ensuite la force d'adhérence du Tesa 4970® à l'aide d'un test de pelage à 180°. Les résultats obtenus sont regroupés en tableau 3.

TABLEAU 3

| Formulations silicones | FORCE D'ADHERENCE TESA 4970 EN G/CM | | | | | | |
|---|---|---|---|---|---|---|---|
| | Sans irradiation | Test 1 | Test 2 | Test 3 | Test 4 | Test 5 | Test 6 |
| Formulation 1 : Poly200® +cata 211® (témoin) | 8,4 | 16,3 | 23,7 | 28,3 | 50 | 38,9 | 48,8 |
| Formulation 4 : POLY 200® +CATA 211® + 5% TMPTA (essai 2): | 14,1 | 27,5 | 85,1 | 92,6 | 98,5 | 90,7 | 93,4 |
| Formulation 3 : Poly 200+cata 211+ 0.34% TMPTA (essai 3): | 16 | 19,7 | 36,7 | 57,2 | 87,9 | 59,2 | 68,1 |

On note une augmentation de la force de pelage avec l'intensité d'irradiation pour les systèmes additivés. L'effet modulant dépend directement du taux de TMPTA.

EXEMPLE 3

On utilise une formulation silicone standard réticulant thermiquement (huile vinylées/réticulant huile SiH cata platine) A cette formulation est ajouté à titre d'additif modulant la résine Silcolease 21621 ®.

La formulation testée comprend donc la résine Silcolease 11365 ® (huile PDMS fonctionnalisée SiVi)/le réticulant Silcolease 12031® (huile PDMS fonctionnalisée SiH) et le catalyseur platine Karstedt Silcolease cata 12070®. La composition exacte est ajustée pour avoir un ratio SiH /SiVi de 1.7 et le taux de Pt de l'ordre de 100ppm. A cette formulation est ajouté 10% de la résine Silcolease 21621®. La formulation détaillée est la suivante :

| | Formulation 5 : Sans additif | Formulation 6 :Avec additif |
|---|---|---|
| Résine Silcolease 11365® | 100 | 90 |
| Résine Silcolease 21621® | | 10 |
| Réticulant Silcolease 12031® | 2,5 | 2,2 |
| Catalyseur Silcolease 12070® | 5 | 5 |

Ces formulations sont enduites à une vitesse de 50 m/min sur un film OPP CR50 d'UCB (film Polypropylène) à l'aide d'un pilote d'enduction Rotomec. Le revêtement siliconé est réticulé par passage dans un four thermique chauffé à 150°C. Les dépôts sont de l'ordre de 1,2g/m2 pour assurer une bonne couverture du support.

L'enduction et la réticulation sur le support OPP ne posent aucun problème : pas de manifestation d'aspect huileux, de démouillage ni de gommage au toucher.

Les revêtements obtenus sont ensuite adhésivés avec l'adhésif Tesa 4970®. Le complexe subit une irradiation d'une source EB dans les conditions présentées en tableau 1 de l'exemple 1. Cette irradiation est faite au travers du film support et de la couche silicone. Dans les heures qui suivent l'irradiation EB, le complexe est séparé par test de pelage à 180° à une vitesse de 300mm/mn comme décrit dans la norme FINAT3. Les forces de pelage obtenues sont regroupées dans le tableau 3.

Tableau 3

| | FORCE D'ADHERENCE TESA 4970 EN G/CM | | | | | | |
|---|---|---|---|---|---|---|---|
| | Sans irradiation | Test 1 | Test 2 | Test 3 | Test 4 | Test 5 | Test 6 |
| Formulation 5 | 4.6 | 6.7 | 11.4 | 14.7 | 18.5 | 18.4 | 18.9 |
| Formulation 6 | 2.8 | 7.7 | 45.7 | 78.4 | 66.4 | 72.2 | 78.1 |

On note dans tous les cas que le niveau d'adhérence du PSA est augmenté après irradiation. Cette force d'adhérence dépend de l'énergie dispensée par la source EB.

EXEMPLE 4

On utilise une formulation standard réticulant en UV radicalaire constitué d'une huile acrylate et d'un Photoinitiateur radicalaire.

La formulation est constituée de l'huile Silcolease 21621 avec comme catalyseur du Darocure 1173 ® de Ciba Specialities. La formulation détaillée est la suivante :

| | Formulation 7 |
|---|---|
| Résine Silcolease 21621® | 98 |
| Darocure 1173® | 2 |

Les formulations sont enduites à l'aide d'une barre de Meyer sur un film OPP CR50 d'UCB (film Polypropylène). Le revêtement siliconé est réticulé par passage sous une lampe UV IST Puissance de 80W/cm à une vitesse de 10m/mn . Pour assurer une bonne polymérisation le revêtement est dans une atmosphère d'azote.

Les dépôts sont de l'ordre de 1,2g/$m^2$ pour assurer une bonne couverture du support. L'enduction sur le support ainsi que la polymérisation des mélanges ne pose aucun problème : pas de manifestation d'aspect huileux, de démouillage ni de gommage au toucher.

Les revêtements obtenus sont ensuite adhésivés avec l'adhésif Tesa 4970®. Le complexe est ensuite soumis à une irradiation d'une source EB. Les six conditions d'irradiation sont décrites en tableau 1 de l'exemple 1. L'irradiation est faite au travers du film support et de la couche silicone.

Dans les heures qui suivent l'irradiation EB, le complexe est séparé par test de pelage à 180° à une vitesse de 300mm/mn comme décrit dans la norme FINAT3. Les forces de pelage obtenues sont regroupées dans le tableau ci dessous.

Tableau 5

| | FORCE D'ADHERENCE TESA 4970 EN G/CM | | | | | | |
|---|---|---|---|---|---|---|---|
| | Sans irradiation | Test 1 | Test 2 | Test 3 | Test 4 | Test 5 | Test 6 |
| Formulation 7 : Silcolease résine 21621® + darocure 1173® | 9.6 | 30 | 80 | 100 | 120 | 120 | 140 |

**Revendications**

1. Utilisation, dans un complexe silicone/adhésif comprenant au moins un revêtement silicone appliqué sur un premier support et un revêtement adhésif appliqué sur un second support, d'un additif choisi parmi

   (i) les dérivés organiques (meth)acrylates,

   (ii) les alcényléthers, et

   (ii) les silicones à fonction(s) (meth)acrylate(s) et/ou à fonction(s) alcényléther(s).

   dans le revêtement silicone, pour réguler la force de décollement d'une interface silicone/adhésif où l'activité dudit additif est initiée et modulée par irradiation de type faisceau d'électrons.

**2.** Utilisation selon la revendication 1, **caractérisé en ce que** les deux supports sont constitués de deux entités distinctes, disposées de manière à ce que le revêtement de silicone du premier support soit en contact avec le revêtement adhésif du second support.

**3.** Utilisation selon la revendication 1, **caractérisé en ce que** les deux supports sont constitués respectivement par chacune des deux faces d'une même entité.

**4.** Utilisation selon l'une des revendications 1 à 3, **caractérisé en ce que** l'activité de l'additif de régulation de la force de décollement est initiée et modulable par exposition d'au moins l'interface silicone/adhésif à au moins une irradiation de type faisceau d'électrons.

**5.** Utilisation selon l'une des revendications 1 à 5, **caractérisé en ce que** l'additif de régulation de la force de décollement est un silicone à fonction(s) (meth)acrylate(s) etlou alcényléther(s).

**6.** Utilisation selon la revendication 5, **caractérisé en ce que** les silicones à fonction (méth)acrytate sont choisis parmi les organopolysiloxanes à fonctions acrylates, méthacrylates, éthers de (meth)acrylates et esters de méth (acrylates) liées à la chaîne polysiloxane par une liaison Si-C.

**7.** Utilisation selon la revendication 5, **caractérisé en ce que** les silicones à fonction alcényléther dérivent d'une réaction d'hydrosilylation entre des huiles contenant des motifs structuraux SiH et des composés portant des fonctions alcényléther tels des allylvinyléthers, allylvinyloxyéthoxybanzène et analogues.

**8.** Utilisation selon l'une des revendications précédentes, **caractérisé en ce que** l'additif de régulation de la force de décollement est employé à raison de 0,1 à 20 % en poids du mélange total silicone.

**9.** Utilisation selon l'une des revendications précédentes, **caractérisé en ce que** le revêtement silicone dérive de la polymérisation et/ou réticulation de monomères, oligomères et/ou polymères polyorganosiloxanes.

**10.** Utilisation selon la revendication 9, **caractérisé en ce que** la polymérisation et/ou réticulation dérive de l'hydrosilylation entre d'une part des monomères, oligomères et/ou polymères portant des motifs structuraux Si-H réactifs et d'autre part des monomères, oligomères et/ou polymères portant un groupement réactif aliphatique insaturé.

**11.** Utilisation selon la revendication 10, **caractérisé en ce que** le polyorganosiloxane ayant par molécule au moins un radical réactif SiH est un polyorganohydrogénosiloxane A comportant :

* des motifs de formule (1) :

$$H_aW_bSiO_{\frac{4-(a+b)}{2}} \quad (1)$$

dans laquelle :

- les symboles W, semblables et/ou différents représentent:

  · un radical alkyle linéaire ou ramifié contenant 1 à 18 atomes de carbone, éventuellement substitué par au moins un halogène, de préférence le fluor, les radicaux alkyle étant de préférence méthyle, éthyle, propyle, octyle et 3,3,3-trifluoropropyle,

  · un radical cycloalkyle contenant entre 5 et 8 atomes de carbone cycliques, éventuellement substitué par au moins un halogène, de préférence le fluor,

  · un radical aryle contenant entre 6 et 12 atomes de carbone pouvant être substitué éventuellement sur la partie aryle par des halogènes, des alkyles et/ou des alkoxyles contenant 1 à 3 atomes de carbone, de préférence phényle ou dichlorophényle, ou

  · une partie arylalkyle ayant une partie alkyle contenant entre 5 et 14 atomes de carbone et une partie aryle contenant entre 6 et 12 atomes de carbone, substituée éventuellement sur la partie aryle par

des halogènes, des alkyles et/ou des alkoxyles contenant 1 à 3 atomes de carbone,

- a est 1 ou 2, b est 0, 1 ou 2, avec la somme (a+b) ayant une valeur comprise entre 1 et 3,

* et éventuellement d'autres motifs de formule moyenne (2) :

$$WcSiO_{\frac{4-c}{2}} \quad (2)$$

dans laquelle W a la même signification que ci-dessus et c a une valeur comprise entre 0 et 3.

12. Utilisation selon la revendication 11, **caractérisé en ce que** les polyorganosiloxanes A sont choisis parmi les diméthylpolysiloxanes à extrémités hydrogénodiméthylsilyles, les copolymères diméthylhydrogénométhylpolysiloxanes à extrémités triméthylsilyles, les copolymères diméthylhydrogénométhylpolysiloxanes à extrémités hydrogénodiméthylsilyles, les hydrogénométhylpolysiloxanes à extrémités triméthylsilyles et les hydrogénométhylpolysiloxanes cycliques.

13. Utilisation selon l'une des revendications 10 à 12, **caractérisé en ce que** le polyorganosiloxane présentant par molécule au moins un groupement réactif aliphatique insaturé est un polyorganosiloxane B comprenant des motifs semblables ou différents de formule (3) :

$$W'_dY_eSiO_{\frac{4-(d+e)}{2}} \quad (3)$$

dans laquelle :

- les symboles W, semblables et/ou différents représentent:
  - un radical alkyle linéaire ou ramifié contenant 1 à 18 atomes de carbone, éventuellement substitué par au moins un halogène, de préférence le fluor, les radicaux alkyle étant de préférence méthyle, éthyle, propyle, octyle et 3,3,3-trifluoropropyle,
  - un radical cycloalkyle contenant entre 5 et 8 atomes de carbone cycliques, éventuellement substitué par au moins un halogène, de préférence le fluor,
  - un radical aryle contenant entre 6 et 12 atomes de carbone pouvant être substitué éventuellement sur la partie aryle par des halogènes, des alkyles et/ou des alkoxyles contenant 1 à 3 atomes de carbone, de préférence phényle ou dichlorophényle,
  - une partie arylalkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,
- les symboles Y sont semblables ou différents et représentent un reste alcényle linéaire ou ramifié en $C_1$-$C_{12}$, et présentant au moins une insaturation éthylénique en extrémité de chaîne et/ou dans la chaîne et éventuellement au moins un hétéroatome ;
- e est égal à 1 ou 2, d est égal à 0, 1 ou 2 avec la somme (d +e) ayant une valeur comprise entre 1 et 3

et éventuellement d'autres motifs de formule moyenne (2) :

$$WcSiO_{\frac{4-c}{2}} \quad (2)$$

dans laquelle W répond à la définition proposée pour W' et c a une valeur comprise entre 0 et 3.

**14.** Utilisation selon l'une des revendications 10 à 13, **caractérisé en ce que** le revêtement silicone comprend des composés A et des composés B en quantité telle que le rapport molaire Si-H/ groupement insaturé est compris entre 0,4 et 10, et de préférence est d'environ 1,7.

**15.** Utilisation selon l'une des revendications 10 à 14 **caractérisé en ce que** le revêtement silicone comprend en outre un catalyseur de type complexe thermosensible du platine.

**16.** Utilisation selon l'une des revendications 10 à 15, **caractérisé en ce que** le revêtement silicone contient en outre un inhibiteur de la réaction.

**17.** Utilisation selon l'une des revendications 1 à 9, **caractérisé en ce que** le revêtement de silicone dérive de la déshydrogénocondensation entre, d'une part, un dérivé polyorganosiloxane A possédant au moins un radical SiH réactif par molécule et, d'autre part, un polyorganosiloxane C présentant par molécule au moins un radical SiOH réactif.

**18.** Utilisation selon la revendication 17, **caractérisé en ce que** le polyorganosiloxane possédant au moins un radical SiH réactif par molécule est un polyorganosilokane A tel que défini en revendication 12 ou 13.

**19.** Utilisation selon la revendication 17 ou 18 **caractérisé en ce que** les dérivés polyorganosiloxanes (C) sont choisis parmi les polyorganosiloxanes comportant :

* des motifs de formule (4) suivante :

$$(OH)_f W''_g SiO_{\frac{4-(f+g)}{2}} \qquad (4)$$

dans laquelle :

- les symboles W'', semblables ou différents, représentent :

  · un radical alkyle linéaire ou ramifié contenant 1 à 18 atomes de carbone, éventuellement substitué par au moins un halogène, de préférence le fluor, les radicaux alkyle étant de préférence méthyle, éthyle, propyle, octyle et 3,3,3-trifluoropropyle,

  · un radical cycloalkyle contenant entre 5 et 8 atomes de carbone cycliques, éventuellement substitué par au moins un halogène, de préférence le fluor,

  · un radical aryle contenant entre 6 et 12 atomes de carbone pouvant être substitué éventuellement sur la partie aryle par des halogènes, des alkyles et/ou des alkoxyles contenant 1 à 3 atomes de carbone, de préférence phényle ou dichlorophényle, ou

  - une partie arylalkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

- f est 1 ou 2, g est 0, 1 ou 2, avec la somme (f+g) ayant une valeur comprise entre 1 et 3,
  et éventuellement d'autres motifs de formule (2)

$$WcSiO_{\frac{4-c}{2}} \qquad (2)$$

dans laquelle W répond à la définition proposée pour W'' et c a une valeur comprise entre 0 et 3.

**20.** Utilisation selon l'une des revendications 17 à 19, **caractérisé en ce que** les polyorganosiloxanes A utilisés comportent de 1 à 50 motifs SiH par molécule et les polyorganosiloxanes C utilisés comportent de 1 à 50 motifs SiOH par molécule.

**21.** Utilisation selon l'une des revendications 1 à 9 **caractérisé en ce que** le revêtement silicone dérive de la polymérisation et/ou réticulation par irradiation UV, activation thermique ou par faisceau d'électrons de monomères, oligomères ou polymères polyorganosiloxanes portant des motifs réactifs de type acrylate, époxy, oxétane, dioxolane et/ou alcényléther.

**22.** Utilisation selon la revendication 21, **caractérisé en ce que** les polyorganohydrogénosiloxanes comportent

* des motifs de formule (5):

$$Z_hW'''_iSiO_{\frac{4-(h+j)}{2}} \qquad (5)$$

dans laquelle :

- les symboles W''', semblables et/ou différents, représentent :

· un radical alkyle linéaire ou ramifié contenant 1 à 18 atomes de carbone, éventuellement substitué par au moins un halogène, de préférence le fluor, les radicaux

alkyle étant de préférence méthyle, éthyle, propyle, octyle et 3,3,3-trifluoropropyle,

· un radical cycloalkyle contenant entre 5 et 8 atomes de carbone cycliques, éventuellement substitué par au moins un halogène, de préférence le fluor,

· un radical aryle contenant entre 6 et 12 atomes de carbone pouvant être substitué éventuellement sur la partie aryle par des halogènes, des alkyles et/ou des alkoxyles - contenant 1 à 3 atomes de carbone, de préférence phényle ou dichlorophényle, ou

une partie arytalkyle ayant une partie alkyle contenant entre 5 et 14 atomes de carbone et une partie aryle contenant entre 6 et 12 atomes de carbone, substituée éventuellement sur la partie aryle par des halogènes, des alkyles et/ou des alkoxyles contenant 1 à 3 atomes de carbone,

- les symboles Z sont semblables ou différents et représentent :

· un groupement W''',

· un radical hydrogène,

· et/ou un groupement organofonctionnel réticulable, de préférence un groupement acrylatefonctionnel, époxyfonctionnel, oxétanefonctionnel, dioxolanefonctionnel et/ou alcénylétherfonctionnel, relié au silicium du polyorganosiloxane par l'intermédiaire d'un radical divalent contenant de 2 à 20 atomes de carbone et pouvant contenir au moins un hétéroatome, de préférence de l'oxygène,

avec l'un au moins des symboles Z représentant un groupement organique fonctionnel réticulable.

- h est égal à 1 ou 2, i est égale à 0,1 ou 2 avec la somme (h+i) ayant une valeur comprise entre 1 et 3.

* éventuellement d'autres motifs de formule (2)

$$WcSiO_{\frac{4-c}{2}} \qquad (2)$$

dans laquelle W répond à la définition proposée pour W''' et c a une valeur comprise entre 0 et 3.

**23.** Utilisation selon la revendication 21 ou 22, **caractérisé en ce que** les polyorganosiloxanes utilisés comportent de 3 à 10 groupements organofonctionnels par chaine macromoléculaire.

**24.** Utilisation selon l'une des revendications 21 à 28, **caractérisée en ce que** les groupements organofonctionnels sont choisis parmi :

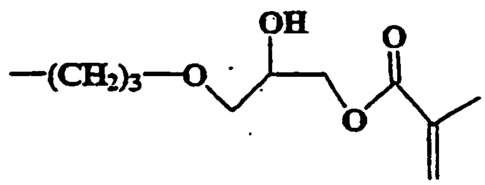

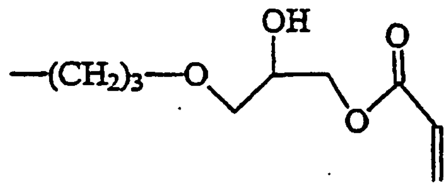

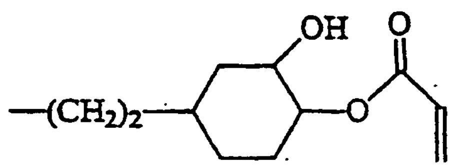

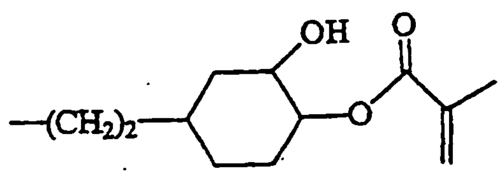

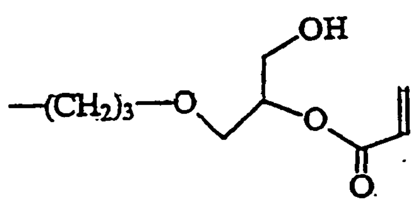

et leurs isomères ;

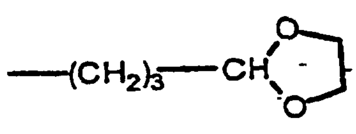

;

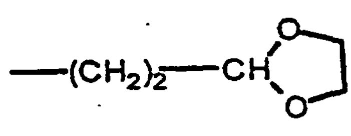

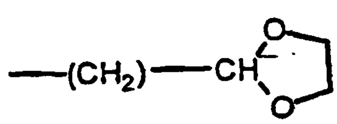

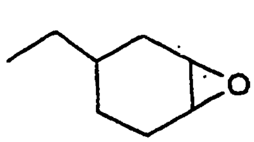 ; 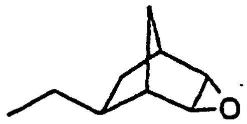 ; 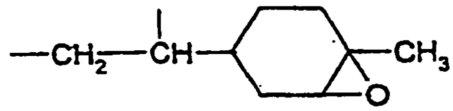

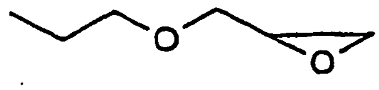 ;

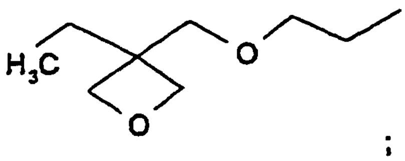 ; 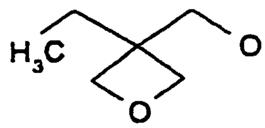 ; 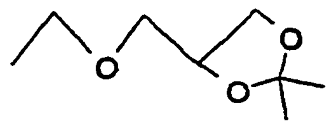

$$-(O)_{n'}-(CH_2)_n-O-CH=CH_2$$

$$-(O)_{n'}-(CH_2)_n-R^1-O-CH=CH_2$$

$$-(O)_{n'}-(CH_2)_{n''}-O-CH=CH-R^2$$

dans lesquelles :

- n' représente 0 ou 1 et n" un entier compris entre 1 et 5
- $R^1$ représente :
  - un radical alkylene linéaire, ramifié ou cyclique en $C_1$-$C_{12}$, éventuellement substitué,
  - ou un radical arylène en $C_5$-$C_{12}$, de préférence phénylène, éventuellement substitué, dé préférence par un à trois groupements alkyles en $C_1$-$C_8$,
- $R^2$ représente un radical alkyle linéaire ou ramifié en $C_1$-$C_6$.

**25.** Utilisation selon l'une des revendications précédentes, **caractérisé en ce que** le revêtement adhésif dérive d'une émulsion adhésive sensible. à la pression.

**26.** Utilisation selon la revendication 25, **caractérisé en ce que** les émulsions adhésives sensibles à la pression sont obtenues par polymérisation de monomères possédant une température de transition vitreuse comprise entre -70°C et -10°C.

**27.** Utilisation selon la revendication 26, **caractérisé en ce que** les monomères sont choisis dans le groupe constitué :

- des esters(méth)acryliques comme les esters de l'acide acrylique et de l'acide méthacrylique avec les alcanols en $C_1$-$C_{12}$ hydrogénés ou fluorés, de préférence $C_1$-$C_8$, notamment l'acrylate de méthyle, l'acrylate d'éthyle, l'acrylate de propyle, l'acrylate de n-butyle, l'acrylate d'isobutyle, l'acrylate de 2-éthylehexyle, l'acrylate de tert-butyle, l'acrylate d'hexyle, l'acrylate d'heptyle, l'acrylate d'octyle, l'acrylate d'isooctyle, l'acrylate de décyle, l'acrylate de dodécyle, le méthacrylate de méthyle, le méthacrylate d'éthyle, le méthacrylate de n-butyle, le méthacrylate d'isobutyle ;
- des nitriles vinyliques dont plus particulièrement ceux ayant de 3 à 12 atomes de carbone, comme en particulier

l'acrylonitrile et le méthacrylonitrile ;

- des esters vinyliques d'acide carboxylique comme l'acétate de vinyle, le versatate de vinyle, le propionate de vinyle,
- des acides mono- et di- carboxyliques insaturés éthyléniques comme l'acide acrylique, l'acide méthacrylique, l'acide itaconique, l'acide maléique, l'acide fumarique et les mono- et di-alkylesters des acides mono- et di-carboxyliques du type cité avec les alcanols ayant de préférence 1 à 8 atomes de carbone et leurs dérivés N-substitués,
- des amides des acides carboxyliques insaturés comme l'acrylamide, le méthacrylamide, le N-méthylolacrylamide ou méthacrylamide, les N-alkylacrylamides,
- des monomères éthyléniques comportant un groupe acide sulfonique et ses sels alcalins ou d'ammonium par exemple l'acide vinylsulfonique, l'acide vinylbenzènesulfonique, l'acide alpha-acrylamido méthylpropane-sulfonique, le 2-sulfoéthylène-méthacrylate,
- des monomères éthyléniques insaturés comportant un groupe amino secondaire, tertiaire ou quaternaire, ou un groupe hétérocyclique contenant de l'azote tel que par exemple les vinylpyridines, le vinylimidazole, les (méth)acrylates d'aminoalkyle et les (méth)acrylamides d'aminoalkyle comme le diméthylaminoéthyl-acrylate

ou diméthylaminoéthyl-méthacrylate, le ditertiobutylaminoéthyl-acrylate ou le ditertiobutylaminoéthyl-méthacrylate, le diméthylaminométhyl-acrylamide ou diméthylaminométhyl-méthacrylamide,

- des monomères zwitterioniques comme par exemple l'acrylate de sulfopropyl(diméthyl)aminopropyle,
- des monomères éthyléniques portant un groupement sulfate,
- des monomères éthyléniques portant une ou plusieurs fonction(s) phosphate et/ou phosphonate,
- et leurs mélanges.

**28.** Complexe silicone/adhésif comprenant au moins un revêtement silicone appliqué sur un premier support et un revêtement adhésif appliqué sur un second support, et dont la force de décollement d'une interface silicone/adhésif est modulable, **caractérisé en ce que** ledit revêtement silicone comprend au moins un additif de régulation de la force de décollement d'une interface silicone/adhésif et dont l'activité est initiée et modulable par irradiation de type faisceau d'électrons, ledit additif étant le triméthyl pentanediol triacrylate (TMPTA).

**29.** Complexe silicone/adhésif comprenant au moins un revêtement silicone appliqué sur un premier support et un revêtement adhésif appliqué sur un second support, et dont la force de décollement d'une interface silicone/adhésif est modulable, **caractérisé en ce que** ledit revêtement silicone comprend au moins un additif de régulation de la force de décollement d'une interface silicone/adhésif et dont l'activité est initiée et modulable par irradiation de type faisceau d'électrons, ledit additif étant le tetraacrylate de pentacrythritol.

**30.** Article **caractérisé en ce qu'**il comprend un complexe selon l'une des revendications 28 ou 29.

**31.** Artide selon la revendication 30 **caractérisé en ce qu'**il s'agit d'étiquettes, de feuilles autocollantes ou de rubans adhésifs.

## Patentansprüche

**1.** Verwendung in einem Silicon/Klebstoff-Verbundmaterial, das mindestens eine Siliconbeschichtung, die auf einem ersten Träger aufgebracht ist, und eine Haftbeschichtung, die auf einem zweiten Träger aufgebracht ist, umfasst, eines Additivs, das aus

I) organischen (Meth-)Acrylatderivaten,
II) Alkenylethern und
III) Siliconen mit (Meth-)Acrylatfunktion(en) und/oder mit Alkenyletherfunktion (en)

ausgewählt ist, in der Siliconbeschichtung, um die Ablösekraft an einer Silicon/Klebstoff-Grenzfläche einzustellen, wobei die Wirksamkeit des Additivs durch eine Bestrahlung mit Elektronenstrahlen ausgelöst und verändert wird.

**2.** Verwendung nach Anspruch 1, **dadurch gekennzeichnet, dass** die zwei Träger aus zwei unterachiedlichen Ganzheiten bestehen, die derart angeordnet sind, dass sich die Siliconbeschichtung des ersten Trägers mit der Haftbeschichtung des zweiten Trägers in Berührung befindet.

**3.** Verwendung nach Anspruch 1, **dadurch gekennzeichnet, dass** die zwei Träger aus jeweils einer Seite der zwei Seiten ein und derselben Ganzheit bestehen.

**4.** Verwendung nach einem der Ansprüche 1 bis 3, **dadurch gekennzeichnet, dass** die Wirksamkeit des Additivs Zur Einstellung der Ablösekraft durch Bestrahlung von mindestens der Silicon/Klebstoff-Grenzfläche mit wenigstens Elektronenstrahlen ausgelöst wird und veränderbar ist.

**5.** Verwendung nach einem der Ansprüche 1 bis 4, **dadurch gekennzeichnet, dass** das Additiv zur Einstellung der Ablösekraft ein Silicon mit (Meth-)Acrylat- und/oder Alkenyletherfunktion(en) ist.

**6.** Verwendung nach Anspruch 5, **dadurch gekennzeichnet, dass** die Silicone mit (Meth-)Acrylatfunktion aus Organopolysiloxanen mit Acrylat-, Methacrylat-, (Meth-Acrylatether- und (Meth-) Acrylatesterfunktionen, die mit der Polysiloxankette durch eine Si-C-Bindung verbunden sind, ausgewählt sind.

**7.** Vorwondung nach Anspruch 5, **dadurch gekennzeichnet, dass** die Silicone mit Alkenyletherfunktion sich aus einer Hydrosilylierung von SiH-Struktureinheiten enthaltenden Ölen mit Verbindungen, die Alkenyletherfunktionen tragen, wie Allylvinylether, Allylvinyloxyethoxybenzol und Analoge, ableiten.

**8.** Verwendung nach einem der vorhergehenden Ansprüche, **dadurch gekennzeichnet, dass** das Addtiv zur Einstellung der Ablösekraft mit einem Anteil von 0,1 bis 20 Gew.-% des gesamten Silicongemischs eingesetzt wird.

**9.** Verwendung nach einem der vorhergehenden Ansprüche, **dadurch gekennzeichnet, dass** sich die Siliconbeschichtung aus der Polymerisation und/oder Vernetzung von Polyorganosiloxanmonomeren, -oligomeren und/oder -polymeren ableitet.

**10.** Verwendung nach Anspruch 9, **dadurch gekennzeichnet, dass** sich die Polymerisation und/oder Vernetzung aus der Hydrosilylierung von einerseits Monomeren, Oligomeren und/oder Polymeren, die reaktive Si-H-Grundeinheiten tragen, mit andererseits Monomeren, Oligomeren und/oder Polymeren, die eine reaktive ungesättigte aliphatische Gruppe tragen, ableitet (ableiten).

**11.** Verwendung nach Anspruch 10, **dadurch gekennzeichnet, dass** das Polyorganosiloxan, das mindestens einen reaktiven SiH-Rest pro Molekül besitzt, ein Polyorganohydrogenosiloxan A ist, das:

* Grundeinheiten mit der Formel (1):

$$H_aW_bSiO_{\frac{4-(a+b)}{2}} \quad (1),$$

in welcher

- die Symbole W gleich und/oder voneinander verschieden sind und bedeuten:

  • einen geradkettigen oder verzweigten Alkylrest, der 1 bis 18 Kohlenstoffatome enthält und gegebenenfalls mit mindestens einem Halogen, vorzugsweise Fluor, substituiert ist, wobei die Alkylreste vorzugsweise Methyl, Ethyl, Propyl, Octyl und 3,3,3-Trifluorpropyl sind,

  • einen Cycloalkylrest, der 5 bis 8 cyclische Kohlenstoffatome enthält und gegebenenfalls mit mindestens einem Halogen, vorzugsweise Fluor, substituiert ist,

  • einen Arylrest, der 6 bis 12 Kohlenstoffatome enthält und gegebenenfalls am Arylteil mit Halogenen, Alkylen und/oder Alkoxylen, die 1 bis 3 Kohlenstoffatome enthalten, vorzugsweise Phenyl bzw. Dichlorphenyl, substituiert sein kann, oder

  • einen Arylalkylteil, der einen Alkylteil, der 5 bis 14 Kohlenstoffatome enthält, und einen Arylteil, der 6 bis 12 Kohlenstoffatome enthält, besitzt und gegebenenfalls am Arylteil mit Halogenen, Alkylen und/oder Alkoxylen, die 1 bis 3 Kohlenstoffatome enthalten, substituiert ist, und

- a 1 oder 2 und b 0, 1 oder 2 bedeutet, wobei die Summe (a+b) einen Wert von 1 bis 3 hat,

* und gegebenenfalls weitere Grundeinheiten mit der mittleren Formel (2):

$$W_cSiO_{\frac{4-c}{2}} \quad (2),$$

in welcher W dieselbe Bedeutung wie zuvor und c einen Wert von 0 bis 3 hat,

umfasst.

**12.** Verwendung nach Anspruch 11, **dadurch gekennzeichnet, dass** die Polyorganosiloxane A aus Dimethylpolysiloxanen mit Hydrogenodimethylsilylerden, Dimethylhydrogenomethylpolysiloxancopolymeren mit Trimethylsilylenden, Dimethylhydrogenomethylpolysiloxancopolymeren mit Hydrogenodimethylsilylenden, Hydrogenomethylpolysiloxanen mit Trimethylsilylenden und cyclischen Hydrogenomethylpolysiloxanen ausgewählt sind.

**13.** Verwendung nach einem der Ansprüche 10 bis 12, **dadurch gekennzeichnet, dass** das Polyorganosiloxan, das mindestens eine reaktive ungesättigte aliphatische Gruppe pro Molekül aufweist, ein Polyorganosiloxan B ist, das einander gleiche oder voneinander verschiedene Grundeinheiten mit der Forme 1 (3):

$$W'_cY_oSiO_{\frac{4-(d+e)}{2}} \quad (3),$$

in welcher:

- die Symbole W' gleich und/oder voneinander verschieden sind und bedeuten:
  - einen geradkettigen oder verzweigten Alkylrest, der 1 bis 18 Kohlenstoffatome enthält und gegebenenfalls mit mindestens einem Halogen, vorzugsweise Fluor, substituiert ist, wobei die Alkylreste vorzugsweise Methyl, Ethyl, Propyl, Octyl und 3,3,3-Trifluorpropyl sind,
  - einen Cycloalkylrest, der 5 bis 8 cyclische Kohlenstoffatome enthält und gegebenenfalls mit mindestens einem Halogen, vorzugsweise Fluor, substituiert ist,
  - einen Arylrest, der 6 bis 12 Kohlenstoffatome enthält und gegebenenfalls am Arylteil mit Halogenen, Alkylen und/oder Alkoxylen, die 1 bis 3 Kohlenstoffatome enthalten, vorzugsweise Phenyl bzw. Dichlorphenyl, substituiert sein kann, oder
  - einen Arylalkylteil, der einen Alkylteil, der 5 bis 14 Kohlenstoffatome enthält, und einen Arylteil, der G bis 12 Kohlenstoffatome enthält, besitzt und gegebenenfalls am Arylteil mit Halogenen, Alkylen und/oder Alkoxylen, die 1 bis 3 Kohlenstoffatome enthalten, substituiert ist,
- die Symbole Y gleich oder voneinander verschieden sind und einen geradkettigen oder verzweigten $C_1$- bis $C_{13}$-Alkenylrest bedeuten und mindestens eine ethylenische Ungesättigtheit am Kettenende und/oder in der Kette und gegebenenfalls mindestens ein Heteroatom aufweisen und
- e 1 oder 2 und d 0, 1 oder 2 bedeutet, wobei die Summe (d+e) einen Wert von 1 bis 3 hat, und gegebenenfalls weitere Grundeinheiten mit der mittleren Formel (2):

$$W_cSiO_{\frac{4-c}{2}} \quad (2),$$

in welcher W der für W' gegebenen Definition entspricht und c einen Wert von 0 bis 3 hat,

umfasst.

**14.** Verwendung nach einem der Ansprüche 10 bis 13, **dadurch gekennzeichnet, dass** die Siliconbeschichtung Verbindungen A und Verbindungen B in solchen Mengen umfasst, dass das Molverhältnis von Si-H/ungesättigte Gruppe 0,4 bis 10 und vorzugsweise etwa 1,7 beträgt.

**15.** Verwendung nach einem der Ansprüche 10 bis 14, **dadurch gekennzeichnet, dass** die Siliconbeschichtung außerdem einen Initiator vom Typ eines wärmeempfindlichen Platinkomplexes enthält.

**16.** Verwendung nach einem der Ansprüche 10 bis 15, **dadurch gekennzeichnet, dass** die Siliconbeschichtung darüber hinaus einen Reaktionsinhibitor enthält.

**17.** Verwendung nach einem der Ansprüche 1 bis 9, **dadurch gekennzeichnet, dass** sich die Siliconbeschichtung aus der dehydrierenden Kondensation von einerseits einem Polyorganosiloxanderivat A, das mindestens einen reaktiven SiH-Rest pro Molekül besitzt, mit andererseits einem Polyorganosiloxan C, das mindestens einen reaktiven SiOH-Rest pro Molekül aufweist, ableitet.

**18.** Verwendung nach Anspruch 17, **dadurch gekennzeichnet, dass** das Polyorganosiloxan, das mindestens einen reaktiven SiH-Rest pro Molekül besitzt, ein wie in Anspruch 12 oder 13 definiertes Polyorganosiloxan A ist.

**19.** Verwendung nach Anspruch 17 oder 18, **dadurch gekennzeichnet, dass** die Polyorganosiloxanderivate C aus Polyorganosiloxanen ausgewählt sind, die:

* Grundeinheiten mit folgender Formel (4):

$$(OH)_f W''_g SiO_{\frac{4-(f+g)}{2}} \quad (4),$$

in welcher:

- die Symbole W" gleich oder voneinander verschieden sind und bedeuten:
  - einen geradkettigen oder verzweigten Alkylrest, der 1 bis 18 Kohlenstoffatome enthält und gegebenenfalls mit mindestens einem Halogen, vorzugsweise Fluor, substituiert ist, wobei die Alkylreste vorzugsweise Methyl, Ethyl, Propyl, Octyl und 3,3,3-Trifluorpropyl sind,
  - einen Cycloalkylrest, der 5 bis 8 cyclische Kohlenstoffatome enthält und gegebenenfalls mit mindestens einem Halogen, vorzugsweise Fluor, substituiert ist,
  - einen Arylrest, der 6 bis 12 Kohlenstoffatome enthält und gegebenenfalls am Arylteil mit Halogenen, Alkylen und/oder Alkoxylen, die 1 bis 3 Kohlenstoffatome enthalten, vorzugsweise Phenyl bzw. Dichlorphenyl, substituiert sein kann, oder
  - einen Arylalkylteil, der einen Alkylteil, der 5 bis 14 Kohlenstoffatome enthält, und einen Arylteil, der 6 bis 12 Kohlenstoffatome enthält, besitzt und gegebenenfalls am Arylteil mit Halogenen, Alkylen und/oder Alkoxylen, die 1 bis 3 Kohlenstoffatome enthalten, substituiert ist, und
- f 1 oder 2 und g 0, 1 oder 2 bedeutet, wobei die Summe (f+g) einen Wert von 1 bis 3 hat, und gegebenenfalls weitere Grundeinheiten mit der Formel (2)

$$W_c SiO_{\frac{4-c}{2}} \quad (2),$$

in welcher W der für W" gegebenen Definition entspricht und c einen Wert von 0 bis 3 hat,

umfassen.

**20.** Verwendung nach einem der Ansprüche 17 bis 19, **dadurch gekennzeichnet, dass** die verwendeten Polyorganosiloxane A 1 bis 50 SiH-Grundeinheiten pro Molekül und die verwendeten Polyorganosiloxane C 1 bis 50

SiOH-Grundeinheiten pro Molekül umfassen.

**21.** Verwendung nach einem der Ansprüche 1 bis 9, **dadurch gekennzeichnet, dass** sich die Siliconbeschichtung aus der Polymerisation und/oder Vernetzung von Polyorganosiloxanmonomeren, -oligomeren oder -polymeren, die reaktive Grundeinheiten vom Typ Acrylat, Epoxy, Oxetan, Dioxolan und/oder Alkenylether tragen, durch UV-Strahlung, thermische Aktivierung oder Bestrahlung mit Elektronenstrahlen ableitet.

**22.** Verwendung nach Anspruch 21, **dadurch gekennzeichnet, dass** die Polyorganohydrogenosiloxane:

* Grundeinheiten mit der Formel (5):

$$Z_h W'''_i SiO_{\frac{4-(h+j)}{2}} \quad (5),$$

in welcher;

- die Symbole w''' gleich und/oder voneinander verschieden sind und bedeuten:

  • einen geradkettigen oder verzweigten Alkylrest, der 1 bis 18 Kohlenstoffatome enthält und gegebenenfalls mit mindestens einem Halogen, vorzugsweise Fluor, substituiert ist, wobei die Alkylreste vorzugsweise Methyl, Ethyl, Propyl, Octyl und 3,3,3-Trifluorpropyl sind,

  • einen Cycloalkylrest, der 5 bis 8 cyclische Kohlenstoffatome enthält und gegebenenfalls mit mindestens einem Halogen, vorzugsweise Fluor, substituiert ist,

  • einen Arylrest, der 6 bis 12 Kohlenstoffatome enthält und gegebenenfalls am Arylteil mit Halogenen, Alkylen und/oder Alkoxylen, die 1 bis 3 Kohlenstoffatome enthalten, vorzugsweise Phenyl bzw. Dichlorphenyl, substituiert sein kann, oder

  • einen Arylalkylteil, der einen Alkylteil, der 5 bis 14 Kohlenstoffatome enthält, und einen Arylteil, der 6 bis 12 Kohlenstoffatome enthält, besitzt und gegebenenfalls am Arylteil mit Halogenen, Alkylen und/oder Alkoxylen, die 1 bis 3 Kohlenstoffatome enthalten, substituiert ist,

- die Symbole Z gleich oder voneinander verschieden sind und bedeuten:

  • eine Gruppe W''',
  • einen Wasserstoffrest und/oder
  • eine vernetzbare organofunktionelle Gruppe, vorzugsweise eine acrylatfunktionelle, epoxyfunktionelle, oxetanfunktionelle, dioxolanfunktionelle und/oder alkenyletherfunktionelle Gruppe, die mit dem Silicium des Polyorganosiloxans über einen zweiwertigen Rest verknüpft ist, der 2 bis 20 Kohlenstoffatome enthält und mindestens ein Heteroatom, vorzugsweise Sauerstoff, enthalten kann, wobei mindestens eines der Symbole Z eine vernetzbare funktionelle organische Gruppe bedeutet, und

- h 1 oder 2 und i 0, 1 oder 2 bedeutet, wobei die Summe (h+i) einen Wert von 1 bis 3 hat, und

* gegebenenfalls weitere Grundeinheiten mit der Formel (2)

$$W_c SiO_{\frac{4-f}{2}} \quad (2),$$

in welcher W der für W''' gegebenen Definition entspricht und c einen Wert von 0 bis 3 hat,

umtassen.

**23.** Verwendung nach Anspruch 21 oder 22, **dadurch gekennzeichnet, dass** die verwendeten Polyorganosiloxane 3 bis 10 organofunktionelle Gruppen pro makromolekulare Kette enthalten.

**24.** Verwendung nach einem der Ansprüche 21 bis 23, **dadurch gekennzeichnet, dass** die organofunktionellen Gruppen ausgewählt sind aus

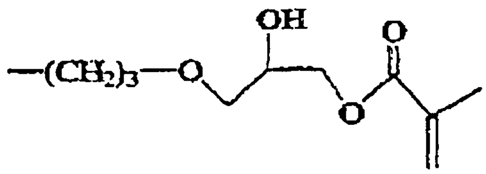

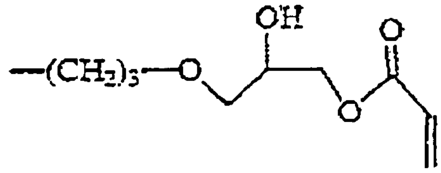

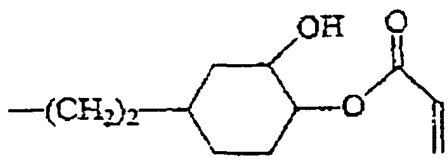

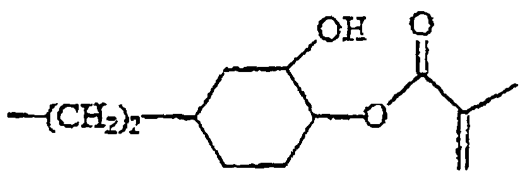

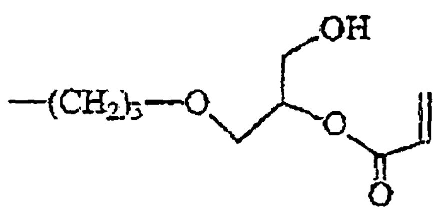

und deren Isomeren,

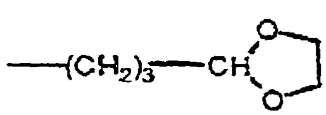
:
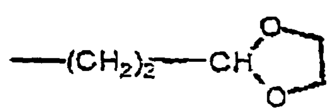

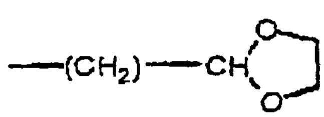

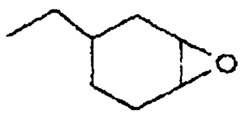 ; 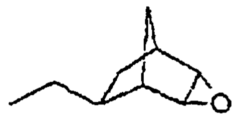 ; 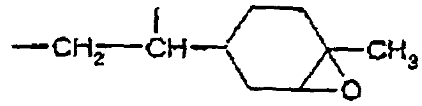

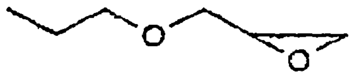 ;

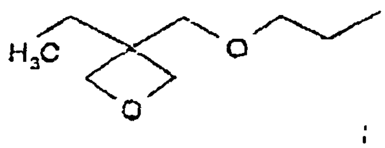 ; 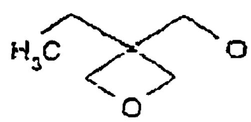 ; 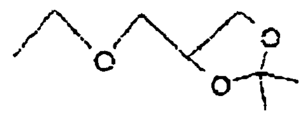

$$-(O)_{n'}-(CH_2)_{n''}-O-CH-CH_2,$$

$$-(O)_{n'}-(CH_2)_{n''}R^1-O-CH=CH_2$$

$$-(O)_{n'}-(CH_2)_{n''}-O-CH=CH-R^2,$$

in welchen:

- n' 0 oder 1 und n" eine ganze Zahl von 1 bis 5,
- $R^4$:
  - einen geradkettigen, verzweigten oder cyclischen $C_1$- bis $C_{12}$-Alkylenrest, der gegebenenfalls substituiert ist, oder
  - einen $C_5$- bic $C_{12}$-Arylenrest, vorzugsweise Phenylen, der gegebenenfalls, vorzugsweise mit einer bis drei $C_1$- bis $C_2$-Alkylgruppen, substituiert ist, und
- $R^2$ einen geradkettigen oder verzweigten $C_1$- bis $C_8$- Alkylrest

bedeutet.

**25.** Verwendung nach einem der vorhergehenden Ansprüche, **dadurch gekennzeichnet, dass** die Haftbeschichtung sich aus einer druckempfindlichen Haftemulsion ableitet.

**26.** Verwendung nach Anspruch 25, **dadurch gekennzeichnet, dass** die druckempfindlichen Haftemulsionen durch Polymerisation von Monomeren, die eine Glasübergangstemperatur von -70 °C bis -10 °C besitzen, erhalten werden.

**27.** Verwendung nach Anspruch 26, **dadurch gekennzeichnet, dass** die Monomere aus der Gruppe ausgewählt sind, die aus

- (Meth-)Acrylestern wie Estern der Acrylsäure und Methacrylsäure mit $C_1$- bis $C_{12}$- und vorzugsweise $C_1$- bis $C_6$-Alkanolen, die hydriert oder fluoriert sind, insbesondere Methyl-, Ethyl-, Propyl-, n-Butyl-, Isobutyl-, 2-Ethylhexyl-, *tert*.-Butyl-, Hexyl-, Heptyl-, Octyl-, Isooctyl - , Decyl- und Dodecylacrylat, Methyl-, Ethyl-, n-Butyl- und Isobutylmethacrylat,

- Vinylnitrilen, davon insbesondere denjenigen, die 3 bis 12 Kohlenstoffatome enthalten, wie speziell Acrylnitril und Methacrylnitril,

- Carbonsäurevinylestern wie Vinylacetat, Vinylversatat und Vinylpropionat,

- ethylenisch ungesättigten Mono- und Dicarbonsäuren wie Acryl-, Methacryl-, Itacon-, Malein- und Fumarsäure und Mono- und Dialkylestern der Mono- und Dicarbonsäuren des zuvor genannten Typs mit Alkanolen mit vorzugsweise 1 bis 8 Kohlenstoffatomen und deren N-substituierten Derivaten,

- Amiden von ungesättigten Carbonsäuren wie Acrylamid, Methacrylamid, N-Methylolacrylamid oder Methacrylamid und N-Alkylacrylamiden,

- ethylenischen Monomeren, die eine Sulfonsäuregruppe enthalten, und ihren Alkali- oder Ammoniumsalzen, beispielsweise Vinylsulfansäure, Vinylbenzolsulfonsäure, $\alpha$-Acrylamidomethylpropansulfonsäure und 2-Sulfoethylenmethacrylat,

- ethylenisch ungesättigten Monomeren, die eine sekundäre, tertiäre oder quaternäre Aminogruppe oder eine heterocyclische Gruppe, die Stickstoff enthält, umfassen, beispielsweise Vinylpyridine, Vinylimidazol, Aminoalkyl(meth)acrylate und Aminoalkyl(meth)acrylamide wie Dimethylaminoethylacrylat oder Dimethylaminoethylmethacrylat, Di-*tert*.-Butylaminoethylacrylat oder Di-*tert*.-Butylaminoethylmethacrylat, Dimethylaminomethylacrylamid oder Dimethylaminomethylmethacrylamid,

- zwitterionischen Monomeren wie Sulfopropyl (dimethyl) aminopropylacrylat,

- ethylenischen Monomeren, die eine Sulfatgruppe tragen,

- ethylenischen Monomeren, die eine oder mehrere Phosphat- und/oder Phosphonatfunktionen tragen, und

- ihren Gemischen besteht.

**28.** Silicon/Klebstoff-Verbundmaterial, das mindestens eine Siliconbeschichtung, die auf einem ersten Träger aufgebracht worden ist, und eine Haftbeschichtung, die auf einem zweiten Träger aufgebracht worden ist, umfasst und dessen Ablösekraft an einer Silicon/Klebstoff-Grenzfläche veränderbar ist, **dadurch gekennzeichnet, dass** die Siliconbeschichtung mindestens ein Additiv für die Einstellung der Ablösekraft an einer Silicon/Klebstoff-Grenzfläche enthält, dessen Wirkung durch Bestrahlung mit Elektronenstrahlung ausgelöst wird und veränderbar ist und welches Trimethylpentandioltriacrylat (TMPTA) ist.

**29.** Silicon/Klebstoff-Verbundmaterial, das mindestens eine Siliconbeschichtung, die auf einem ersten Träger aufgebracht worden ist, und eine Haftbeschichtung, die auf einem zweiten Träger aufgebracht worden ist, umfasst und dessen Ablösekraft an einer Silicon/Klebstoff-Grenzfläche veränderbar ist, **dadurch gekennzeichnet, dass** die Siliconbeschichtung mindestens ein Additiv für die Einstellung der Ablöaekraft an einer Silicon/Klebstoff-Grenzfläche enthält, dessen Wirkung durch Bestrahlung mit Elektronenstrahlung ausgelöst wird und veränderbar ist and welches Pentaerythrittetraacrylat ist.

**30.** Erzeugnis, **dadurch gekennzeichnet, dass** es ein Verbundmaterial nach Anspruch 28 oder 29 umfasst.

**31.** Erzeugnis nach Anspruch 30, **dadurch gekennzeichnet, dass** es sich um Etiketten, Selbstklebefolien oder Klebebänder handelt.

## Claims

**1.** Use, in a silicone/adhesive complex comprising at least one silicone coating applied on a first support and an adhesive coating applied on a second support, of an additive chosen from

(i) organic (meth)acrylate derivatives,

(ii) alkenyl ethers, and

(iii) silicones with (meth)acrylate function(s) and/or with alkenyl ether function(s)

in the silicone coating, in order to regulate the release force of a silicone / adhesive interface, where the activity of said additive is initiated and modulated by irradiation of the electron beam type.

**2.** Use according to claim 1, **characterised in that** the two supports are formed by two distinct entities which are disposed such that the silicone coating of the first support is in contact with the adhesive coating of the second support.

**3.** Use according to claim 1, **characterised in that** the two supports are formed respectively by each of the two faces of the same entity.

**4.** Use according to one of the claims 1 to 3, **characterised in that** the activity of the additive for regulating the release force is initiated and modulatable by exposure of at least the silicone/adhesive interface to at least one irradiation of the electron beam type.

**5.** Use according to one of the claims 1 to 5, **characterised in that** the additive for regulating the release force is a silicone with (meth)acrylate and/or alkenyl ether function(s).

**6.** Use according to claim 5, **characterised in that** the silicones with (meth)acrylate function are chosen from organopolysiloxanes with acrylate, methacrylate, (meth)acrylate ether and meth(acrylate) ester functions bonded to the polysiloxane chain by a Si-C bond.

**7.** Use according to claim 5, **characterised in that** the silicones with alkenyl ether function are derived from a hydrosilylation reaction between oils containing structural units SiH and compounds carrying alkenyl ether functions, such as allylvinylethers, allylvinyloxyethoxybenzene and similar.

**8.** Use according to one of the preceding claims, **characterised in that** the additive for regulating the release force is used at a ratio of 0.1 to 20% by weight of the total silicone mixture.

**9.** Use according to one of the preceding claims, **characterised in that** the silicone coating is derived from the polymerisation and/or cross-linkage of monomers, oligomers and/or polyorganosiloxane polymers.

**10.** Use according to claim 9, **characterised in that** the polymerisation and/or cross-linkage is derived from the hydrosilylation between, on the one hand, monomers, oligomers and/or polymers carrying reactive Si-H structural units and, on the other hand, monomers, oligomers and/or polymers carrying an unsaturated aliphatic reactive group.

**11.** Use according to claim 10, **characterised in that** the polyorganosiloxane having per molecule at least one reactive SiH radical is a polyorganohydrogenosiloxane A comprising:

* units of formula (1):

$$H_aW_bSiO_{\frac{4-(a+b)}{2}} \qquad (1)$$

in which:

- the symbols W, similar and/or different, represent:

  • a linear or branched alkyl radical containing 1 to 18 carbon atoms, possibly substituted by at least one halogen, preferably fluorine, the alkyl radicals being preferably methyl, ethyl, propyl, octyl and 3,3,3-trifluoropropyl,

  • a cycloalkyl radical containing between 5 and 8 cyclic carbon atoms, possibly substituted by at least one halogen, preferably fluorine,

- an aryl radical containing between 6 and 12 carbon atoms being able to be substituted possibly on the aryl part by halogens, alkyls and/or alkoxyls containing 1 to 3 carbon atoms, preferably phenyl or dichlorophenyl, or

- an arylalkyl part having an alkyl part containing between 5 and 14 carbon atoms and an aryl part containing between 6 and 12 carbon atoms, substituted possibly on the aryl part by halogens, alkyls and/or alkoxyls containing 1 to 3 carbon atoms,

- a is 1 or 2, b is 0, 1 or 2, with the sum (a + b) having a value between 1 and 3,

* and possibly other units of the average formula (2):

$$WcSiO_{\frac{4-c}{2}} \qquad (2)$$

in which W has the same meaning as above and c has a value between 0 and 3.

**12.** Use according to claim 11, **characterised in that** the polyorganosiloxanes A are chosen from dimethylpolysiloxanes with hydrogenodimethylsilyl ends, dimethylhydrogenomethylpolysiloxane copolymers with trimethylsilyl ends, dimethylhydrogenomethylpolysiloxane copolymers with hydrogenodimethylsilyl ends, hydrogenomethylpolysiloxanes with trimethylsilyl ends and cyclic hydrogenomethylpolysiloxanes.

**13.** Use according to one of the claims 10 to 12, **characterised in that** the polyorganosiloxane having per molecule at least one unsaturated aliphatic reactive grouping is a polyorganosiloxane B comprising similar or different units of formula (3):

$$W'_dY_eSiO_{\frac{4-(d+e)}{2}} \qquad (3)$$

in which:

- the symbols W', similar and/or different, represent:
  - a linear or branched alkyl radical containing 1 to 18 carbon atoms, possibly substituted by at least one halogen, preferably fluorine, the alkyl radicals being preferably methyl, ethyl, propyl, octyl and 3,3,3-trifluoropropyl,
  - a cycloalkyl radical containing between 5 and 8 cyclic carbon atoms, possibly substituted by at least one halogen, preferably fluorine,
  - a radical aryl containing between 6 and 12 carbon atoms being able to be substituted possibly on the aryl part by halogens, alkyls and/or alkoxyls containing 1 to 3 carbon atoms, preferably phenyl or dichlorophenyl,
  - an arylalkyl part having an alkyl part containing between 5 and 14 carbon atoms and an aryl part containing between 6 and 12 carbon atoms, substituted possibly on the aryl part by halogens, alkyls and/or alkoxyls containing 1 to 3 carbon atoms,
- the symbols Y are similar or different and represent a linear or branched $C_1$-$C_{12}$ alkenyl radical and having at least one ethylene unsaturation at the chain end and/or in the chain and possibly at least one heteroatom:
- e is equal to 1 or 2, d is equal to 0, 1 or 2 with the sum (d + e) having a value between 1 and 3 and possibly other units of the average formula (2):

$$WcSiO_{\frac{4-c}{2}} \qquad (2)$$

in which W fulfils the definition proposed for W' and c has a value between 0 and 3.

**14.** Use according to one of the claims 10 to 13, **characterised in that** the silicone coating comprises compounds A and compounds B in a quantity such that the molar ratio Si-H/unsaturated grouping is between 0.4 and 10, and preferably approx. 1.7.

**15.** Use according to one of the claims 10 to 14, **characterised in that** the silicone coating comprises furthermore a platinum catalyst of the thermo-sensitive complex type.

**16.** Use according to one of the claims 10 to 15, **characterised in that** the silicone coating contains furthermore an inhibitor of the reaction.

**17.** Use according to one of the claims 1 to 9, **characterised in that** the silicone coating is derived from the dehydrogenocondensation between, on the one hand, a polyorganosiloxane derivative A having at least one reactive SiH radical per molecule and, on the other hand, a polyorganosiloxane C having per molecule at least one reactive SiOH radical.

**18.** Use according to claim 17, **characterised in that** the polyorganosiloxane having at least one reactive SiH radical per molecule is a polyorganosiloxane A, as defined in claim 12 or 13.

**19.** Use according to claim 17 or 18, **characterised in that** the polyorganosiloxane derivatives (C) are chosen from polyorganosiloxanes comprising:

* units of the following formula (4)

$$(OH)_f W''_g SiO_{\frac{4-(f+g)}{2}} \quad (4)$$

in which:

- the symbols W", similar or different, represent:

  • a linear or branched alkyl radical containing 1 to 18 carbon atoms, possibly substituted by at least one halogen, preferably fluorine, the alkyl radicals being preferably methyl, ethyl, propyl, octyl and 3,3,3-trifluoropropyl,

  • a cycloalkyl radical containing between 5 and 8 cyclic carbon atoms, possibly substituted by at least one halogen, preferably fluorine,

  • a radical aryl containing between 6 and 12 carbon atoms being able to be substituted possibly on the aryl part by halogens, alkyls and/or alkoxyls containing 1 to 3 carbon atoms, preferably phenyl or dichlorophenyl, or

  • an arylalkyl part having an alkyl part containing between 5 and 14 carbon atoms and an aryl part containing between 6 and 12 carbon atoms, substituted possibly on the aryl part by halogens, alkyls and/or alkoxyls containing 1 to 3 carbon atoms,

- f is 1 or 2, g is 0, 1 or 2, with the sum (f + g) having a value between 1 and 3,

and possibly other units of formula (2)

$$WcSiO_{\frac{4-c}{2}} \quad (2)$$

in which W fulfils the definition proposed for W" and c has a value between 0 and 3.

**20.** Use according to one of the claims 17 to 19, **characterised in that** the polyorganosiloxanes A used comprise 1

to 50 SiH units per molecule and the polyorganosiloxanes C used comprise 1 to 50 SiOH units per molecule.

**21.** Use according to one of the claims 1 to 9, **characterised in that** the silicone coating is derived from the polymerisation and/or cross-linkage by UV irradiation, by thermal activation or by electron beam of polyorganosiloxane monomers, oligomers or polymers carrying reactive units of the acrylate, epoxy, oxetane, dioxolane and/or alkenyl ether type.

**22.** Use according to claim 21, **characterised in that** the polyorganohydrogenosiloxanes comprise:

* units of formula (5):

$$Z_h W'''_i SiO_{\frac{4-(h+j)}{2}} \quad (5)$$

in which:

- the symbols W''', similar and/or different, represent:

  • a linear or branched alkyl radical containing 1 to 18 carbon atoms, possibly substituted by at least one halogen, preferably fluorine, the alkyl radicals being preferably methyl, ethyl, propyl, octyl and 3,3,3-trifluoropropyl,

  • a cycloalkyl radical containing between 5 and 8 cyclic carbon atoms, possibly substituted by at least one halogen, preferably fluorine,

  • an aryl radical containing between 6 and 12 carbon atoms being able to be substituted possibly on the aryl part by halogens, alkyls and/or alkoxyls containing 1 to 3 carbon atoms, preferably phenyl or dichlorophenyl, or

  • an arylalkyl part having an alkyl part containing between 5 and 14 carbon atoms and an aryl part containing between 6 and 12 carbon atoms, substituted possibly on the aryl part by halogens, alkyls and/or alkoxyls containing 1 to 3 carbon atoms,

- the symbols Z are similar or different and represent:

  • a grouping W''',

  • a hydrogen radical,

  • and/or a cross-linkable organofunctional grouping, preferably an acrylatefunctional, epoxyfunctional, oxetanefunctional, dioxolanefunctional and/or alkenyletherfunctional grouping connected to the silicon of the polyorganosiloxane by means of a bivalent radical containing 2 to 20 carbon atoms, and being able to contain at least one heteroatom, preferably oxygen,

  • with one at least one of the symbols Z representing a cross-linkable functional organic grouping.

- h is equal to 1 or 2, i is equal to 0, 1 or 2 with the sum (h + i) having a value between 1 and 3.

* possibly other units of formula (2)

$$WcSiO_{\frac{4-c}{2}} \quad (2)$$

in which W fulfils the definition proposed for W''' and c has a value between 0 and 3.

**23.** Use according to claim 21 or 22, **characterised in that** the polyorganosiloxanes used comprise 3 to 10 organofunctional groupings per macromolecular chain.

**24.** Use according to one of the claims 21 to 23, **characterised in that** the organofunctional groupings are chosen from:

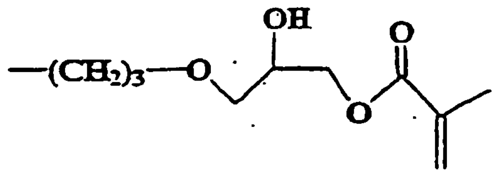

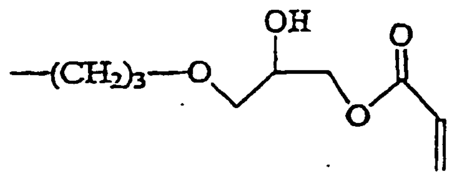

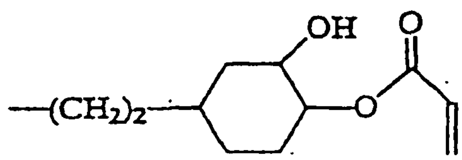

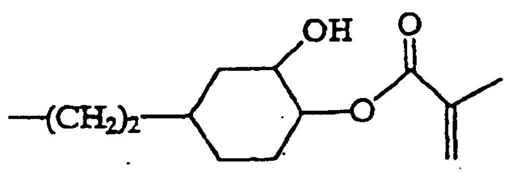

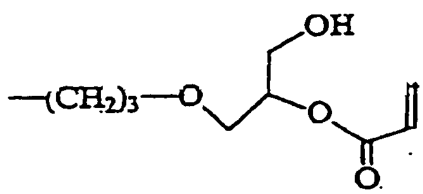

and their isomers;

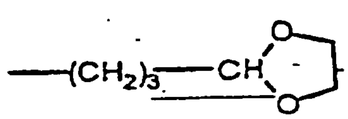 ; 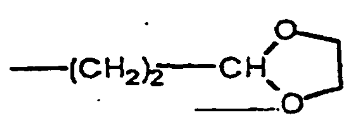

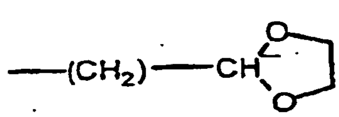

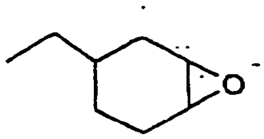 ; 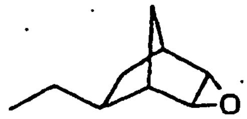 ; 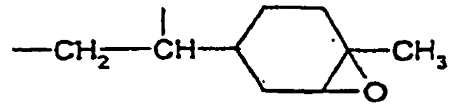

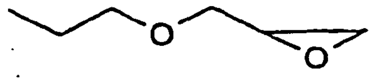 ;

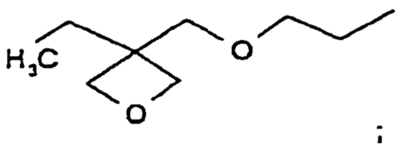 ; 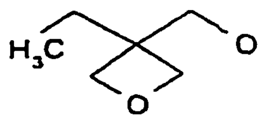 ; 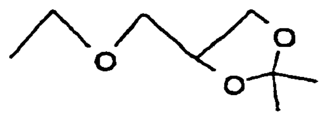

$$-(O)_{n'}-(CH_2)_{n''}-O-CH=CH_2$$

$$-(O)_{n'}-(CH_2)_{n''}-R^1-O-CH=CH_2$$

$$-(O)_{n'}-(CH_2)_{n''}-CH=CH-R^2$$

in which:

- n' represents 0 or 1 and n'' a whole number between 1 and 5
- $R^1$ represents:
  - a linear, branched or cyclic $C_1$-$C_{12}$ alkylene radical, possibly substituted,
  - or a $C_5$-$C_{12}$ arylene radical, preferably phenylene, possibly substituted, preferably by one to three $C_1$-$C_8$ alkyl groupings,
- $R^2$ represents a linear or branched $C_1$-$C_6$ alkyl radical.

**25.** Use according to one of the preceding claims, **characterised in that** the adhesive coating is derived from an adhesive emulsion which is sensitive to pressure.

**26.** Use according to claim 25, **characterised in that** the adhesive emulsions sensitive to pressure are obtained by polymerisation of monomers which have a vitreous transition temperature between -70°C and -10°C.

**27.** Use according to claim 26, **characterised in that** the monomers are chosen in the group comprising:

- (meth)acrylic esters, such as the esters of acrylic acid and of methacrylic acid with $C_1$-$C_{12}$ hydrogenated or fluorinated alkanols, preferably $C_1$-$C_8$, in particular methyl acrylate, ethyl acrylate, propyl acrylate, n-butyl acrylate, isobutyl acrylate, 2-ethylhexyl acrylate, tert-butyl acrylate, hexyl acrylate, heptyl acrylate, octyl acrylate, isooctyl acrylate, decyl acrylate, dodecyl acrylate, methyl methacrylate, ethyl methacrylate, n-butyl methacrylate, isobutyl methacrylate;
- vinyl nitriles, more particularly those which have 3 to 12 carbon atoms, such as in particular acrylonitrile and methacrylonitrile;

- vinyl esters of carboxylic acid, such as vinyl acetate, vinyl versatate, vinyl propionate,
- mono- and dicarboxylic unsaturated ethylene acids, such as acrylic acid, methacrylic acid, itaconic acid, maleic acid, fumaric acid, and mono- and dialkylesters of mono- and dicarboxylic acids of the type mentioned with the alkanols, preferably having 1 to 8 carbon atoms and their N-substituted derivatives,
- amides of unsaturated carboxylic acids, such as acrylamide, methacrylamide, N-methylolacrylamide or methacrylamide, N-alkylacrylamides,
- ethylene monomers comprising a sulphonic acid group and its alkaline or ammonium salts, for example vinylsulphonic acid, vinylbenzenesulphonic acid, alpha-acrylamidomethylpropanesulphonic acid, 2-sulphoethylene-methacrylate,
- unsaturated ethylene monomers comprising a secondary, tertiary or quarternary amino group, or a heterocyclic group containing nitrogen, such as for example vinylpyridines, vinylimidazole, aminoalkyl (meth)acrylates and aminoalkyl (meth)acrylamides, such as dimethylaminoethyl-acrylate or dimethylaminoethyl-methacrylate, ditertiobutylaminoethylacrylate or ditertiobutylaminoethyl-methacrylate, dimethylaminomethyl-acrylamide or dimethylaminomethylmethacrylamide,
- zwitterionic monomers, such as for example sulphopropyl(dimethyl)aminopropyl acrylate,
- ethylene monomers carrying a sulphate grouping,
- ethylene monomers carrying one or more phosphate and/or phosphonate function(s),
- and mixtures thereof.

**28.** Silicon/ adhesive complex comprising at least one silicone coating applied on a first support and an adhesive coating applied on a second support, and the release force of a silicone/adhesive interface of which is modulatable, **characterised in that** said silicone coating comprises at least one additive for regulating the release force of a silicone/adhesive interface and the activity of which is initiated and modulatable by irradiation of the electron beam type, said additive being trimethylpentanediol triacrylate (TMPTA) .

**29.** Silicone/adhesive complex comprising at least one silicone coating applied on a first support and an adhesive coating applied on a second support, and the release force of a silicone/adhesive interface of which is modulatable, **characterised in that** said silicone coating comprises at least one additive for regulating the release force of a silicone/adhesive interface and the activity of which is initiated and modulatable by irradiation of the electron beam type, said additive being pentaerythritol tetraacrylate.

**30.** Article **characterised in that** it comprises a complex according to one of the claims 28 or 29.

**31.** Article according to claim 30, **characterised in that** it concerns labels, self-adhesive sheets or adhesive tapes.